(19) Europäisches Patentamt / European Patent Office / Office européen des brevets

(11) **EP 4 429 136 A1**

(12) **EUROPEAN PATENT APPLICATION**
published in accordance with Art. 153(4) EPC

(43) Date of publication:
**11.09.2024 Bulletin 2024/37**

(21) Application number: **22897887.0**

(22) Date of filing: **24.11.2022**

(51) International Patent Classification (IPC):
***H04L 1/00*** *(2006.01)*

(52) Cooperative Patent Classification (CPC):
**H04L 1/00; H04L 47/32**

(86) International application number:
**PCT/CN2022/134030**

(87) International publication number:
**WO 2023/093804 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2021 CN 202111436377**

(71) Applicant: **Huawei Technologies Co., Ltd.
Shenzhen, Guangdong 518129 (CN)**

(72) Inventors:
• **WU, Hao
  Shenzhen, Guangdong 518129 (CN)**
• **CHEN, Yonggang
  Shenzhen, Guangdong 518129 (CN)**
• **AI, Shuo
  Shenzhen, Guangdong 518129 (CN)**
• **LI, Geng
  Shenzhen, Guangdong 518129 (CN)**

(74) Representative: **Körber, Martin Hans
  Mitscherlich PartmbB
  Patent- und Rechtsanwälte
  Karlstraße 7
  80333 München (DE)**

(54) **PACKET LOSS MANAGEMENT METHOD AND RELATED APPARATUS**

(57) This application discloses a packet loss management method. The method includes: A controller determines, based on a network quality requirement of service traffic and a network quality parameter of each segment link on a forwarding path of the service traffic, a packet loss concealment policy that needs to be executed on each segment link on the forwarding path, and delivers the packet loss concealment policy for each segment link to the forwarding node, and the forwarding node executes the corresponding packet loss concealment policy. Enhanced transmission control is performed on each segment link on the forwarding path, so that a packet loss rate on each segment link can be ensured, to ensure a packet loss rate on an entire forwarding path and improve transmission quality of an end-to-end path.

FIG. 6

EP 4 429 136 A1

## Description

This application claims priority to Chinese Patent Application No. 202111436377.8, filed with the China National Intellectual Property Administration on November 29, 2021 and entitled "PACKET LOSS MANAGEMENT METHOD AND RELATED APPARATUS", which is incorporated herein by reference in its entirety.

## TECHNICAL FIELD

This application relates to the field of communication technologies, and in particular, to a packet loss management method and a related apparatus.

## BACKGROUND

As an internet penetrates into all industries from a single computer communication field, various new applications emerge one after another, such as a super-large real-time audio and video conference that supports "Ten Thousand People Online and Thousands People Interact", an online cloud game, and augmented reality (Augmented Reality, AR)/virtual reality (Virtual Reality, VR) immersive experience. These emerging applications pose higher requirements on network latency, a throughput, and a packet loss rate.

The internet is usually composed of a plurality of autonomous systems, and there are complex commercial relationships for interconnection between the autonomous systems. Due to the commercial relationships, a transmission path of the internet is usually not the shortest path in the network. For example, transmission between two nodes in a same area may be bypassed to another area, which increases end-to-end latency.

An internet overlay (Overlay) network technology is proposed in the industry, to resolve a non-optimal internet path problem. Network relay forwarding nodes (Point-of-Presence, PoP) are placed around data centers in different areas on the internet, and PoPs are connected and scheduled to each other. In this way, a new virtual overlay network is constructed on the basis of an existing public internet. Based on the overlay network, real-time service-oriented acceleration can be implemented through transmission according to a unified management configuration and data plane transmission protocol. The overlay network is also referred to as a real-time service acceleration network (Real-Time Network, RTN).

Because the RTN is actually a virtual overlay network and an underlay (underlay) network at a lower layer of the RTN usually includes heterogeneous networks, for example, a public internet and a private line network, an end-to-end RTN path usually spans a plurality of different underlay network links.

However, in some cases, after a global controller of the RTN computes a forwarding path based on quality of an overlay path in a normal state, when the forwarding path is actually used to forward traffic, burst congestion may occur on a downstream underlay link, causing quality of the forwarding path to deteriorate. Consequently, normal traffic forwarding is affected.

## SUMMARY

This application provides a packet loss management method. Enhanced transmission control is performed on each segment link on a forwarding path, to ensure that an expected deterministic packet loss rate is achieved on each segment link, so as to achieve a deterministic packet loss rate on an entire forwarding path and improve transmission quality of an end-to-end path.

A first aspect of this application provides a packet loss management method, and the method is used in a forwarding node. The method includes: A first forwarding node obtains a plurality of packet loss concealment policies, where there is a correspondence between each packet loss concealment policy in the plurality of packet loss concealment policies, and a forwarding path of a packet and a service type corresponding to the packet. The plurality of packet loss concealment policies obtained by the first forwarding node may be delivered by, for example, a controller that manages the first forwarding node.

The first forwarding node obtains a packet and a forwarding path of the packet. The forwarding path of the packet may be determined by the controller or a centralized controller in an RTN network based on a requirement of service traffic and real-time quality of a network link, and then delivered to the first forwarding node.

The first forwarding node adds a first packet loss concealment policy to the packet to obtain an updated packet, and forwards the updated packet to a second forwarding node based on the forwarding path.

The first packet loss concealment policy is determined by the first forwarding node from the plurality of packet loss concealment policies based on the service type of the packet and the forwarding path. The first packet loss concealment policy indicates a packet loss concealment policy used when a packet loss occurs on a segment link between the first forwarding node and the second forwarding node.

In this solution, a forwarding node adds a packet loss concealment policy for a segment link to a packet based on a forwarding path and a service type of the packet, so that another forwarding node on the segment link can execute the corresponding packet loss concealment policy. In this way, packet loss concealment transmission control is performed on each segment link on the forwarding path. Because packet loss concealment transmission control is performed on each segment link, a packet loss rate on each segment link is ensured, to ensure a packet loss rate on an entire forwarding path and improve transmission quality of an end-to-end path.

In a possible implementation, the method further includes: The first forwarding node determines, based on the service type, a latency threshold of the packet, where the latency threshold indicates duration in which a forwarding node on the forwarding path is allowed to execute a packet loss concealment policy. The first forwarding node adds the first packet loss concealment policy and the latency threshold to the packet, to obtain the updated packet.

In this solution, a latency threshold is set, to limit duration for executing a packet loss concealment policy by a forwarding node, so that timely packet forwarding may not be affected due to excessively long duration for executing the packet loss concealment policy. This ensures timeliness of packet delivery.

In a possible implementation, the method further includes: The first forwarding node measures network quality of a segment link between the first forwarding node and another forwarding node, to obtain a network quality parameter of one or more segment links. The first forwarding node sends the network quality parameter of the one or more segment links to a controller.

In this solution, a forwarding node periodically measures network quality of a segment link between forwarding nodes, and uploads a measured network quality parameter to the controller, so that the controller can determine, based on real-time network quality of the segment link, a packet loss concealment policy used by each segment link.

In a possible implementation, the network quality parameter of the one or more segment links includes one or more of latency, a packet loss rate, a bandwidth capacity, and jitter.

In a possible implementation, that the first forwarding node adds a first packet loss concealment policy to the packet includes: The first forwarding node encapsulates a first packet header into the packet, where the first packet header carries the first packet loss concealment policy.

In a possible implementation, the first packet header further includes an execution parameter of the first packet loss concealment policy. If the first packet loss concealment policy is an automatic repeat request ARQ policy, the execution parameter includes a quantity of automatic retransmission times. Alternatively, if the first packet loss concealment policy is a forward error correction FEC policy, the execution parameter includes an encoding scheme, a total quantity of packets, and a total quantity of source code packets. Alternatively, if the first packet loss concealment policy is a multipath retransmission policy, the execution parameter includes a packet retransmission path.

A second aspect of this application provides a packet loss management method, including: A second forwarding node receives a first packet sent by a first forwarding node, where the first packet includes a first packet loss concealment policy. The second forwarding node executes the first packet loss concealment policy in the first packet, where the first packet loss concealment policy is determined by the first forwarding node based on a service type of the first packet and a forwarding path of the first packet. The second forwarding node forwards the first packet.

In this solution, by executing a packet loss concealment policy indicated in a packet, the forwarding node can implement packet loss concealment transmission control on each segment link on a forwarding path. Because packet loss concealment transmission control is performed on each segment link, a packet loss rate on each segment link is ensured, to ensure a packet loss rate on an entire forwarding path and improve transmission quality of an end-to-end path.

In a possible implementation, the method further includes: The second forwarding node obtains a plurality of packet loss concealment policies, where there is a correspondence between each packet loss concealment policy in the plurality of packet loss concealment policies, and a forwarding path of a packet and a service type. The second forwarding node obtains the forwarding path of the first packet. The second forwarding node adds a second packet loss concealment policy to the first packet to obtain an updated first packet, and forwards the updated first packet to a third forwarding node based on the forwarding path.

The second packet loss concealment policy is determined by the second forwarding node from the plurality of packet loss concealment policies based on the service type of the first packet and the forwarding path. The second packet loss concealment policy indicates a packet loss concealment policy used when a packet loss occurs on a segment link between the second forwarding node and the third forwarding node.

Simply speaking, when the second forwarding node is not the last forwarding node on the forwarding path, the second forwarding node also adds a packet loss concealment policy for a next segment link to a packet, so that a next forwarding node can execute the corresponding packet loss concealment policy, to ensure transmission quality of the segment link.

In a possible implementation, the first packet further includes a first latency threshold, and the first latency threshold indicates duration in which a forwarding node on the forwarding path is allowed to execute a packet loss concealment policy. The second forwarding node updates the first latency threshold in the first packet based on duration for executing the first packet loss concealment policy, to obtain an updated first packet. The second forwarding node forwards the updated first packet.

For example, it is assumed that the first latency threshold in the first packet is 50 ms, and duration in which the second forwarding node executes the first packet loss concealment policy is 10 ms. In this case, the second forwarding node may update the first latency threshold in the first packet to 40 ms. Then, the second forwarding node forwards the updated first packet.

Simply speaking, after the second forwarding node completely executes the first packet loss concealment policy, the second forwarding node consumes a part of duration in which a packet loss concealment policy is allowed to be executed. Therefore, the second forwarding node needs to update the first latency threshold in the first packet, that is, the duration in which the second forwarding node executes the first packet loss concealment policy is subtracted from the first latency threshold.

In a possible implementation, the method further includes: The second forwarding node receives a second packet. The second packet includes a third packet loss concealment policy and a second latency threshold. The second latency threshold indicates duration in which a forwarding node on the forwarding path is allowed to execute a packet loss concealment policy. The second forwarding node executes the third packet loss concealment policy, and determines a difference between the second latency threshold and duration for executing the third packet loss concealment policy. The second forwarding node determines a fourth packet loss concealment policy based on a service type of the second packet and a forwarding path. The fourth packet loss concealment policy indicates a packet loss concealment policy used when a packet loss occurs on a segment link between the second forwarding node and a fourth forwarding node. The fourth forwarding node is a forwarding node behind the second forwarding node on the forwarding path of the second packet. The second forwarding node forwards an updated second packet to the fourth forwarding node based on a fact that duration for executing the fourth packet loss concealment policy is greater than the difference. The updated second packet is obtained based on the second packet, and the updated second packet does not include a packet loss concealment policy.

In other words, after a forwarding node receives a packet that includes a packet loss concealment policy and a latency threshold, the forwarding node first executes a corresponding packet loss concealment policy in the packet, and computes a difference between the latency threshold in the packet and duration in which the forwarding node executes the packet loss concealment policy. Then, the forwarding node determines a packet loss concealment policy that needs to be executed by a next-hop forwarding node, and determines whether duration for executing the packet loss concealment policy by the next-hop forwarding node is greater than the obtained latency threshold difference. If the duration required by the next-hop forwarding node to execute the packet loss concealment policy is greater than the latency threshold difference, the forwarding node directly removes the packet loss concealment policy from the packet and forwards the packet to a next forwarding node, so that the next forwarding node does not execute the packet loss concealment policy.

It can be ensured by setting a latency threshold that a forwarding node on a forwarding path takes an excessively long time to execute a packet loss concealment policy, and a latency requirement of service traffic can be met.

In a possible implementation, the method further includes: The second forwarding node receives a third packet. The third packet is a source code packet, and the source code packet is a packet including to-be-transmitted data. If a packet loss concealment policy of the third packet is an FEC policy, the second forwarding node forwards the third packet, and locally stores a copy of the third packet, to recover a lost packet.

In other words, for a packet used as a source code packet, after receiving the packet, the second forwarding node locally buffers the packet and sends the packet to a next forwarding node, so that the packet can be transmitted to the next forwarding node in time, to avoid staying in the second forwarding node.

In a possible implementation, the method further includes: The second forwarding node receives a fourth packet. The fourth packet is a repair packet, and the repair packet is used to recover a lost source code packet. If the second forwarding node has obtained all source code packets in a transport block corresponding to the fourth packet, the fourth packet is discarded. The transport block includes a plurality of packets. If the second forwarding node does not obtain all source code packets in a transport block corresponding to the fourth packet, and a quantity of packets that belong to the transport block and that are obtained by the second forwarding node is greater than or equal to a first threshold, a packet in the transport block is decoded based on the fourth packet, to recover a lost source code packet in the transport block. If the second forwarding node does not obtain all source code packets in a transport block corresponding to the fourth packet, and a quantity of packets that belong to the transport block and that are obtained by the second forwarding node is less than a first threshold, the fourth packet is stored.

A third aspect of this application provides a packet loss management method, including: A controller obtains a forwarding path of service traffic and a network quality requirement of the service traffic. The controller obtains network quality parameters of a plurality of segment links on the forwarding path, where each segment link in the plurality of segment links is a link between two neighboring forwarding nodes on the forwarding path. The controller determines, based on the network quality requirement and the network quality parameters, a packet loss concealment policy used when a packet loss occurs on each segment link in the plurality of segment links. The controller sends the packet loss concealment policy to forwarding nodes on the plurality of segment links. The network quality requirement of the service traffic is a network quality condition that needs to be met by the service traffic in an entire forwarding process. For example, the network quality requirement of the service traffic may be that a packet loss rate of the service traffic in an entire forwarding path is less than 3%. A network quality parameter of the segment link may include, for example, one or more of latency, a packet loss rate, a bandwidth capacity, and jitter.

In this solution, the controller determines, based on the network quality requirement of the service traffic and a network quality parameter of each segment link on the forwarding path of the service traffic, a packet loss concealment policy that needs to be executed on each segment link on the forwarding path, and delivers the packet loss concealment policy for each segment link to the forwarding node, and the forwarding node executes the corresponding packet loss concealment policy. Enhanced transmission control is performed on each segment link on the forwarding path, so that a packet loss rate on each segment link can be ensured, to ensure a packet loss rate on an entire forwarding path and improve transmission quality of an end-to-end path.

In a possible implementation, the packet loss concealment policy includes one or more of an automatic repeat request ARQ policy, a forward error correction FEC policy, and a multipath retransmission policy.

In a possible implementation, the ARQ policy includes a quantity of automatic retransmission times; the FEC policy includes an encoding scheme, a total quantity of packets, and a total quantity of source code packets; and the multipath retransmission policy includes a packet retransmission path.

In a possible implementation, the obtaining network quality parameters of a plurality of segment links on the forwarding path includes: obtaining a network quality parameter set, where the network quality parameter set includes network quality parameters that are of segment links and that are uploaded by a plurality of forwarding nodes; and determining the network quality parameters of the plurality of segment links on the forwarding path from the network quality parameter set.

In a possible implementation, the network quality requirement includes a packet loss rate. The determining a packet loss concealment policy for each segment link in the plurality of segment links based on the network quality requirement and the network quality parameters includes: determining, based on the packet loss rate in the network quality requirement, a maximum allowed packet loss rate for each segment link in the plurality of segment links; and determining the packet loss concealment policy for each segment link in the plurality of segment links based on the maximum allowed packet loss rate for each segment link and an actual packet loss rate that is for each segment link and that is indicated by the network quality parameter.

In a possible implementation, the determining the packet loss concealment policy for each segment link in the plurality of segment links based on the maximum allowed packet loss rate for each segment link and an actual packet loss rate that is for each segment link and that is indicated by the network quality parameter includes: determining, based on the maximum allowed packet loss rate for each segment link and the actual packet loss rate that is for each segment link and that is indicated by the network quality parameter, a packet loss concealment policy set corresponding to each segment link in the plurality of segment links, where the packet loss concealment policy set includes one or more packet loss concealment policies that meet a maximum packet loss rate requirement; and determining, based on actual latency that is of each segment link and that is indicated by the network quality parameter, a packet loss concealment policy with the lowest latency from the packet loss concealment policy set corresponding to each segment link.

A fourth aspect of this application provides a packet loss management method, where the method is used in a system that includes a controller and a plurality of forwarding nodes, and the method includes: The controller obtains a forwarding path of service traffic and a network quality requirement of the service traffic, and the controller determines network quality parameters of a plurality of segment links on the forwarding path, where each segment link in the plurality of segment links is a link between two neighboring forwarding nodes on the forwarding path. The controller determines, based on the network quality requirement and the network quality parameters, a packet loss concealment policy used when a packet loss occurs on each segment link in the plurality of segment links, where there is a correspondence between the packet loss concealment policy, and the forwarding path of the service traffic and a service type corresponding to the service traffic. The controller sends the packet loss concealment policy to forwarding nodes on the plurality of segment links. The forwarding nodes on the plurality of segment links execute, in a packet forwarding process, a packet loss concealment policy that corresponds to a forwarding path of a packet and a service type corresponding to the packet, where the packet belongs to the service traffic.

In a possible implementation, the obtaining network quality parameters of a plurality of segment links on the forwarding path includes: obtaining a network quality parameter set, where the network quality parameter set includes network quality parameters that are of segment links and that are uploaded by the plurality of forwarding nodes; and determining the network quality parameters of the plurality of segment links on the forwarding path from the network quality parameter set.

In a possible implementation, the network quality requirement includes a packet loss rate. The determining a packet loss concealment policy for each segment link in the plurality of segment links based on the network quality requirement and the network quality parameters includes: determining, based on the packet loss rate in the network quality requirement, a maximum allowed packet loss rate for each segment link in the plurality of segment links; and determining the packet loss concealment policy for each segment link in the plurality of segment links based on the maximum allowed packet loss rate for each segment link and an actual packet loss rate that is for each segment link and that is indicated by the network quality parameter.

In a possible implementation, the determining the packet loss concealment policy for each segment link in the plurality of segment links based on the maximum allowed packet loss rate for each segment link and an actual packet loss rate that is for each segment link and that is indicated by the network quality parameter includes: determining, based on the maximum allowed packet loss rate for each segment link and the actual packet loss rate that is for each segment link and that is indicated by the network quality parameter, a packet loss concealment policy set corresponding to each segment link in the plurality of segment links, where the packet loss concealment policy set includes one or more packet loss concealment policies that meet a maximum packet loss rate requirement; and determining, based on actual latency that is of each segment link and that is indicated by the network quality parameter, a packet loss concealment policy with the lowest latency from the packet loss concealment policy set corresponding to each segment link.

In a possible implementation, that the forwarding nodes on the plurality of segment links execute, in a packet forwarding process, a packet loss concealment policy that corresponds to a forwarding path of a packet and a service type includes: A first forwarding node obtains a packet and a forwarding path of the packet, where the first forwarding node is an initial forwarding node on the plurality of segment links. The first forwarding node adds a first packet loss concealment policy to the packet to obtain an updated packet, and forwards the updated packet based on the forwarding path. The first packet loss concealment policy is determined by the first forwarding node from a plurality of packet loss concealment policies based on a service type corresponding to the packet and the forwarding path. The first packet loss concealment policy indicates a packet loss concealment policy used when a packet loss occurs on a segment link between the first forwarding node and a forwarding node next to the first forwarding node. The plurality of packet loss concealment policies are from the controller.

In a possible implementation, the method further includes: The first forwarding node determines, based on the service type of the packet, a latency threshold corresponding to the packet, where the latency threshold indicates duration in which a forwarding node on the forwarding path is allowed to execute a packet loss concealment policy. That the first forwarding node adds a first packet loss concealment policy to the packet to obtain an updated packet includes: The first forwarding node adds the first packet loss concealment policy and the latency threshold to the packet, to obtain the updated packet.

In a possible implementation, the method further includes: The first forwarding node measures network quality of a segment link between the first forwarding node and another forwarding node, to obtain a network quality parameter of one or more segment links. The first forwarding node sends the network quality parameter of the one or more segment links to the controller.

In a possible implementation, that the first forwarding node adds a first packet loss concealment policy to the packet includes: The first forwarding node encapsulates a first packet header into the packet, where the first packet header carries the first packet loss concealment policy.

In a possible implementation, the first packet header further includes an execution parameter of the first packet loss concealment policy. If the first packet loss concealment policy is an automatic repeat request ARQ policy, the execution parameter includes a quantity of automatic retransmission times. Alternatively, if the first packet loss concealment policy is a forward error correction FEC policy, the execution parameter includes an encoding scheme, a total quantity of packets, and a total quantity of source code packets. Alternatively, if the first packet loss concealment policy is a multipath retransmission policy, the execution parameter includes a packet retransmission path.

In a possible implementation, that the forwarding nodes on the plurality of segment links execute, in a packet forwarding process, a packet loss concealment policy that corresponds to a forwarding path of a packet and a service type includes: A second forwarding node receives a first packet, where the first packet includes a second packet loss concealment policy, and the second forwarding node is any node other than the initial forwarding node on the plurality of segment links. The second forwarding node executes the second packet loss concealment policy in the first packet, where the second packet loss concealment policy is determined by a forwarding node previous to the second forwarding node based on a service type of the first packet and a forwarding path of the first packet. The second forwarding node forwards the first packet.

In a possible implementation, that the second forwarding node forwards the first packet includes: The second forwarding node obtains the forwarding path of the first packet. The second forwarding node adds a third packet loss concealment policy to the first packet to obtain an updated first packet, and forwards the updated first packet to a third forwarding node based on the forwarding path. The third packet loss concealment policy is determined by the second forwarding node from the plurality of packet loss concealment policies based on the service type of the first packet and the forwarding path. The third packet loss concealment policy indicates a packet loss concealment policy used when a packet loss occurs on a segment link between the second forwarding node and the third forwarding node.

In a possible implementation, the first packet further includes a first latency threshold, and the first latency threshold indicates duration in which a forwarding node on the forwarding path is allowed to execute a packet loss concealment policy. That the second forwarding node forwards the first packet includes: The second forwarding node updates the first latency threshold in the first packet based on duration for executing the second packet loss concealment policy, to obtain an updated first packet. The second forwarding node forwards the updated first packet.

In a possible implementation, the method further includes: The second forwarding node receives a second packet. The second packet includes a fourth packet loss concealment policy and a second latency threshold. The second latency threshold indicates duration in which a forwarding node on the forwarding path is allowed to execute a packet loss concealment policy. The second forwarding node executes the third packet loss concealment policy, and determines a difference between the second latency threshold and duration for executing the third packet loss concealment policy. The second forwarding node determines the fourth packet loss concealment policy based on a service type of the second packet and a forwarding path. The fourth packet loss concealment policy indicates a packet loss concealment policy used when a packet loss occurs on a segment link between the second forwarding node and a fourth forwarding node. The fourth forwarding node is a forwarding node behind the second forwarding node on the forwarding path of the second packet. The second forwarding node forwards an updated second packet to the fourth forwarding node based on a fact that duration for executing the fourth packet loss concealment policy is greater than the difference. The updated second packet is obtained based on the second packet, and the updated second packet does not include a packet loss concealment policy.

In a possible implementation, the method further includes: The second forwarding node receives a third packet. The third packet is a source code packet, and the source code packet is a packet including to-be-transmitted data. If a packet loss concealment policy of the third packet is the FEC policy, the second forwarding node forwards the third packet, and locally stores a copy of the third packet, to recover a lost packet.

In a possible implementation, the method further includes: The second forwarding node receives a fourth packet. The fourth packet is a repair packet, and the repair packet is used to recover a lost source code packet. If the second forwarding node has obtained all source code packets in a transport block corresponding to the fourth packet, the fourth packet is discarded. The transport block includes a plurality of packets. If the second forwarding node does not obtain all source code packets in a transport block corresponding to the fourth packet, and a quantity of packets that belong to the transport block and that are obtained by the second forwarding node is greater than or equal to a first threshold, a packet in the transport block is decoded based on the fourth packet, to recover a lost source code packet in the transport block. If the second forwarding node does not obtain all source code packets in a transport block corresponding to the fourth packet, and a quantity of packets that belong to the transport block and that are obtained by the second forwarding node is less than a first threshold, the fourth packet is stored.

A fifth aspect of this application provides a network device, including: an obtaining unit, configured to obtain a plurality of packet loss concealment policies, where there is a correspondence between each packet loss concealment policy in the plurality of packet loss concealment policies, and a forwarding path of a packet and a service type corresponding to the packet; and the obtaining unit is further configured to obtain a packet and a forwarding path of the packet; a processing unit, configured to add a first packet loss concealment policy to the packet to obtain an updated packet; and a sending unit, configured to forward the updated packet to a second forwarding node based on the forwarding path. The first packet loss concealment policy is determined by a first forwarding node from the plurality of packet loss concealment policies based on the service type of the packet and the forwarding path. The first packet loss concealment policy indicates a packet loss concealment policy used when a packet loss occurs on a segment link between the first forwarding node and the second forwarding node.

In a possible implementation, the processing unit is further configured to: determine, based on the service type of the packet, a latency threshold of the packet, where the latency threshold indicates duration in which a forwarding node on the forwarding path is allowed to execute a packet loss concealment policy; and add, by using the first forwarding node, the first packet loss concealment policy and the latency threshold to the packet, to obtain the updated packet.

In a possible implementation, the processing unit is further configured to measure network quality of a segment link between the first forwarding node and another forwarding node, to obtain a network quality parameter of one or more segment links; and the sending unit is further configured to send the network quality parameter of the one or more segment links to a controller.

In a possible implementation, the network quality parameter of the one or more segment links includes one or more of latency, a packet loss rate, a bandwidth capacity, and jitter.

In a possible implementation, the sending unit is configured to encapsulate a first packet header into the packet, where the first packet header carries the first packet loss concealment policy.

In a possible implementation, the first packet header further includes an execution parameter of the first packet loss concealment policy. If the first packet loss concealment policy is an automatic repeat request ARQ policy, the execution parameter includes a quantity of automatic retransmission times. Alternatively, if the first packet loss concealment policy is a forward error correction FEC policy, the execution parameter includes an encoding scheme, a total quantity of packets, and a total quantity of source code packets. Alternatively, if the first packet loss concealment policy is a multipath retransmission policy, the execution parameter includes a packet retransmission path.

A sixth aspect of this application provides a network device, including: an obtaining unit, configured to receive a first packet sent by a first forwarding node, where the first packet includes a first packet loss concealment policy; a processing unit, configured to execute the first packet loss concealment policy in the first packet, where the first packet loss concealment policy is determined by the first forwarding node based on a service type of the first packet and a forwarding path of the first packet; and a sending unit, configured to forward the first packet.

In a possible implementation, the obtaining unit is further configured to obtain a plurality of packet loss concealment policies. There is a correspondence between each packet loss concealment policy in the plurality of packet loss concealment policies, and a forwarding path of a packet and a service type. The obtaining unit is further configured to obtain, by using the second forwarding node, the forwarding path of the first packet. The processing unit is further configured to add a second packet loss concealment policy to the first packet, to obtain an updated first packet. The sending unit is further configured to forward the updated first packet to a third forwarding node based on the forwarding path. The second packet loss concealment policy is determined by the second forwarding node from the plurality of packet loss concealment policies based on the service type of the first packet and the forwarding path. The second packet loss concealment policy indicates a packet loss concealment policy used when a packet loss occurs on a segment link between the second forwarding node and the third forwarding node.

In a possible implementation, the first packet further includes a first latency threshold, and the first latency threshold indicates duration in which a forwarding node on the forwarding path is allowed to execute a packet loss concealment policy.

The processing unit is further configured to update the first latency threshold in the first packet based on duration for executing the first packet loss concealment policy, to obtain an updated first packet. The sending unit is specifically configured to forward the updated first packet.

In a possible implementation, the obtaining unit is further configured to receive a second packet. The second packet includes a third packet loss concealment policy and a second latency threshold. The second latency threshold indicates duration in which a forwarding node on the forwarding path is allowed to execute a packet loss concealment policy. The processing unit is further configured to: execute the third packet loss concealment policy, and determine a difference between the second latency threshold and duration for executing the third packet loss concealment policy. The processing unit is further configured to determine a fourth packet loss concealment policy based on a service type of the second packet and a forwarding path. The fourth packet loss concealment policy indicates a packet loss concealment policy used when a packet loss occurs on a segment link between the second forwarding node and a fourth forwarding node. The fourth forwarding node is a forwarding node behind the second forwarding node on the forwarding path of the second packet. The sending unit is further configured to forward an updated second packet to the fourth forwarding node based on a fact that duration for executing the fourth packet loss concealment policy is greater than the difference. The updated second packet is obtained based on the second packet, and the updated second packet does not include a packet loss concealment policy.

In a possible implementation, the obtaining unit is further configured to receive a third packet. The third packet is a source code packet, and the source code packet is a packet including to-be-transmitted data. The processing unit is further configured to: if a packet loss concealment policy of the third packet is an FEC policy, forward, by using the second forwarding node, the third packet, and locally store a copy of the third packet, to recover a lost packet.

In a possible implementation, the obtaining unit is further configured to receive a fourth packet. The fourth packet is a repair packet, and the repair packet is used to recover a lost source code packet. The processing unit is further configured to: if the second forwarding node has obtained all source code packets in a transport block corresponding to the fourth packet, discard the fourth packet. The transport block includes a plurality of packets. The processing unit is further configured to: if not all source code packets in a transport block corresponding to the fourth packet are obtained, and a quantity of obtained packets that belong to the transport block is greater than or equal to a first threshold, decode a packet in the transport block based on the fourth packet, to recover a lost source code packet in the transport block; or if not all source code packets in a transport block corresponding to the fourth packet are obtained, and a quantity of obtained packets that belong to the transport block is less than a first threshold, store the fourth packet.

A seventh aspect of this application provides a controller, including: an obtaining unit, configured to obtain a forwarding path of service traffic and a network quality requirement of the service traffic, where the obtaining unit is further configured to obtain network quality parameters of a plurality of segment links on the forwarding path, and each segment link in the plurality of segment links is a link between two neighboring forwarding nodes on the forwarding path; a processing unit, configured to determine, based on the network quality requirement and the network quality parameters, a packet loss concealment policy used when a packet loss occurs on each segment link in the plurality of segment links; and a sending unit, configured to send the packet loss concealment policy to forwarding nodes on the plurality of segment links.

In a possible implementation, the packet loss concealment policy includes one or more of an automatic repeat request ARQ policy, a forward error correction FEC policy, and a multipath retransmission policy.

In a possible implementation, the ARQ policy includes a quantity of automatic retransmission times; the FEC policy includes an encoding scheme, a total quantity of packets, and a total quantity of source code packets; and the multipath retransmission policy includes a packet retransmission path.

In a possible implementation, the obtaining unit is further configured to obtain a network quality parameter set. The network quality parameter set includes network quality parameters that are of segment links and that are uploaded by a plurality of forwarding nodes. The processing unit is further configured to determine the network quality parameters of the plurality of segment links on the forwarding path from the network quality parameter set.

In a possible implementation, the network quality requirement includes a packet loss rate. The processing unit is further configured to: determine, based on the packet loss rate in the network quality requirement, a maximum allowed packet loss rate for each segment link in the plurality of segment links; and determine the packet loss concealment policy for each segment link in the plurality of segment links based on the maximum allowed packet loss rate for each segment link and an actual packet loss rate that is for each segment link and that is indicated by the network quality parameter.

In a possible implementation, the processing unit is further configured to: determine, based on the maximum allowed packet loss rate for each segment link and the actual packet loss rate that is for each segment link and that is indicated by the network quality parameter, a packet loss concealment policy set corresponding to each segment link in the plurality of segment links, where the packet loss concealment policy set includes one or more packet loss concealment policies that meet a maximum packet loss rate requirement; and determine, based on actual latency that is of each segment link and that is indicated by the network quality parameter, a packet loss concealment policy with the lowest latency from the packet loss concealment policy set corresponding to each segment link.

In a possible implementation, the network quality parameters of the plurality of segment links include one or more of latency, a packet loss rate, a bandwidth capacity, and jitter.

An eighth aspect of this application provides a network device. The network device includes a memory and a processor, where the memory stores code, the processor is configured to execute the code, and when the code is executed, the network device performs the method according to any implementation of the first aspect.

A ninth aspect of this application provides a network device. The network device includes a memory and a processor, where the memory stores code, the processor is configured to execute the code, and when the code is executed, the network device performs the method according to any implementation of the second aspect.

A tenth aspect of this application provides a controller. The controller includes a memory and a processor, where the memory stores code, the processor is configured to execute the code, and when the code is executed, the controller performs the method according to any implementation of the third aspect.

An eleventh aspect of this application provides a network system. The network system includes the network device according to the seventh aspect, the network device according to the eighth aspect, and the controller according to the ninth aspect.

A twelfth aspect of this application provides a computer-readable storage medium. The computer-readable storage medium stores a computer program. When the computer-readable storage medium is run on a computer, the computer is enabled to perform the method according to any implementation of the first aspect to the third aspect.

A thirteenth aspect of this application provides a computer program product. When the computer program product runs on a computer, the computer is enabled to perform the method according to any implementation of the first aspect to the third aspect.

A fourteenth aspect of this application provides a chip, including one or more processors. Some or all of the processors are configured to: read and execute a computer program stored in a memory, to perform the method according to any possible implementation of the first aspect to the third aspect.

Optionally, the chip includes the memory, and the memory and the processor are connected by using a circuit or a wire. Optionally, the chip further includes a communication interface, and the processor is connected to the communication interface. The communication interface is configured to receive data and/or information that needs to be processed. The processor obtains the data and/or information from the communication interface, processes the data and/or information, and outputs a processing result through the communication interface. The communication interface may be an input/output interface. The method provided in embodiments of this application may be implemented by one chip, or may be cooperatively implemented by a plurality of chips.

**BRIEF DESCRIPTION OF DRAWINGS**

FIG. 1 is a schematic diagram of a network capability requirement of media evolution according to an embodiment of this application;
FIG. 2 is a schematic diagram in which an overlay technology is applied to an internet according to an embodiment of this application;

FIG. 3 is a key operation process of an RTN network according to an embodiment of this application;

FIG. 4 is a schematic diagram of overlay packet encapsulation of an RTN according to an embodiment of this application;

FIG. 5 is a schematic diagram of a system architecture to which a packet loss management method is applied according to an embodiment of this application;

FIG. 6 is a schematic flowchart of a packet loss management method 600 according to an embodiment of this application;

FIG. 7 is a schematic diagram of a forwarding path according to an embodiment of this application;

FIG. 8 is a schematic diagram of network quality parameters of a plurality of segment links on a forwarding path according to an embodiment of this application;

FIG. 9 is a schematic diagram of a packet loss concealment policy used on a segment link according to an embodiment of this application;

FIG. 10 is a schematic flowchart of a packet loss management method 1000 according to an embodiment of this application;

FIG. 11 is a schematic diagram of a format of an OEP packet header according to an embodiment of this application;

FIG. 12 is a schematic flowchart of synchronous packet forwarding and buffering according to an embodiment of this application;

FIG. 13 is a schematic flowchart of a packet loss management method 1300 according to an embodiment of this application;

FIG. 14 is a schematic flowchart of packet forwarding according to an embodiment of this application;

FIG. 15 is a schematic diagram of packet forwarding according to an embodiment of this application;

FIG. 16 is a schematic diagram of improvement on a TCP service-based throughput of a client by using a packet loss management method according to an embodiment of this application;

FIG. 17 is a schematic diagram of optimization effect of a packet loss rate during transmission of a transnational link by using a packet loss management method according to an embodiment of this application;

FIG. 18 is a schematic diagram of a structure of a network device 1800 according to an embodiment of this application;

FIG. 19 is a schematic diagram of a structure of a controller 1900 according to an embodiment of this application;

FIG. 20 is a schematic diagram of a structure of a network device 2000 according to an embodiment of this application; and

FIG. 21 is a schematic diagram of a structure of a network device 2100 according to an embodiment of this application.

## DESCRIPTION OF EMBODIMENTS

To make the objectives, technical solutions, and advantages of this application clearer and more comprehensible, the following describes embodiments of this application with reference to the accompanying drawings. It is clearly that described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the descriptions termed in such a manner are interchangeable in proper cases so that embodiments can be implemented in another order than the order illustrated or described in this application. In addition, the terms "include", "contain", and any other variants mean to cover the non-exclusive inclusion, for example, a process, method, system, product, or device that includes a list of steps or modules is not necessarily limited to those steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

For ease of understanding, the following first describes technical terms in embodiments of this application.

Private line network: The private line network provides an independent network transmission channel for an organization, for example, provides an independent network cable for the organization. Specifically, the private line network provides a private line access by relying on a backbone network and broadband metropolitan area network resource in China, to meet a user requirement for accessing an internet or connecting to a local area network area of the user. An advantage of a private line is that security is good, data transmission of the user becomes reliable, and quality of service (Quality of Service, QoS) can be ensured. However, the private line network requires a high lease price and professional management.

Generally speaking, the network private line mainly include two types of channels: 1. a physical dedicated channel, where the physical dedicated channel is a dedicated line constructed between a service provider and a user, the line is exclusively used by the user, and other data cannot enter the line; but a common line may be shared between a plurality of users. 2. a virtual dedicated channel, where the virtual dedicated channel means that specific bandwidth is reserved for a user on a common channel, so that the bandwidth can be exclusively used by the user; and it seems like another channel is constructed on a public channel for only a corresponding user, and user data is encrypted to ensure reliability and security.

A public network/public internet is an internet that is mainly used to access a destination address through an existing internet link. Network quality of the public network/public internet is prone to jitter due to a cross-internet service provider (Internet Service Provider, ISP) or different countries/regions, and QoS of the public network/public internet is worse than that of a private line network.

An automatic repeat request (Automatic Repeat-reQuest, ARQ) means that, when receiving information (a frame) including error data, a receiving station automatically sends a request for retransmitting an error frame.

Forward error correction (Forward Error Correction, FEC) is a method for increasing data communication reliability. In a one-way communication channel, if a data error or loss occurs in transmitted data, a receiver has no permission to request another transmission. FEC is a method for transmitting redundant information based on data. When an error occurs in the transmitted data, the receiver is allowed to reconstruct the data based on the redundant information. When an FEC technology is used, data is encoded according to a specific algorithm before being sent to a transmission channel, redundant information with a data feature is added, and received data is decoded at a receive end according to a corresponding algorithm. In this way, error code generated during transmission is found and corrected.

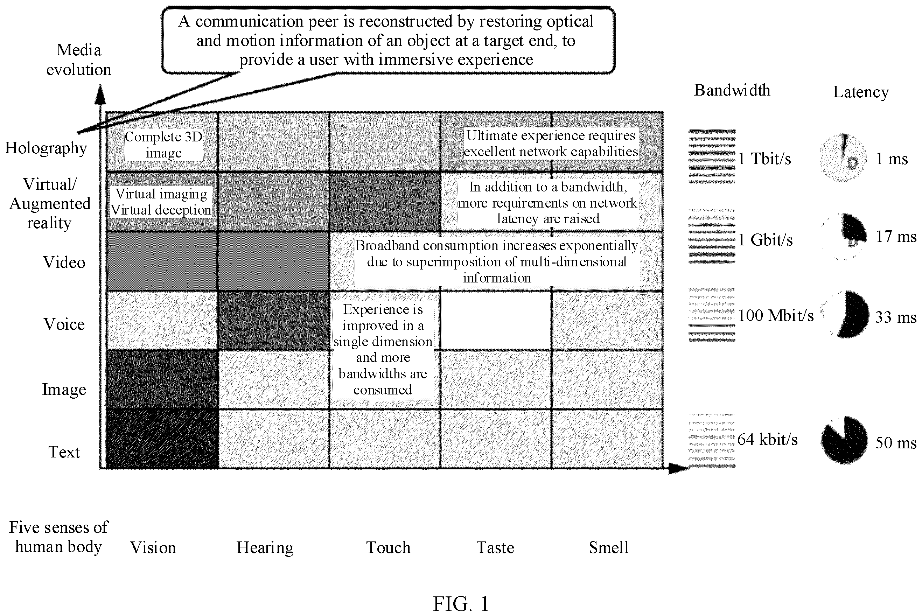

As an internet penetrates into all industries from a single computer communication field, various new applications emerge one after another, such as a super-large real-time audio and video conference that supports "Ten Thousand People Online and Thousands People Interact", an online cloud game, and AR/VR immersive experience. These emerging applications pose higher requirements on network latency, a throughput, and a packet loss rate. Refer to FIG. 1. FIG. 1 is a schematic diagram of a network capability requirement of media evolution according to an embodiment of this application. As shown in FIG. 1, a media evolution path is as follows: a text > in image > a voice > a video > AR/VR > a hologram. In addition, with gradual evolution of media, the media has higher requirements on network bandwidth and latency.

Increasing service requirements drive continuous evolution of a network architecture. Academic and industrial circles have proposed optimized technical solutions in addressing, routing, and transmission protocols. Currently, main achievements are to implement routing acceleration for specific services through centralized management and control and proprietary protocols.

Generally, the internet is usually composed of a plurality of operators/ISPs/autonomous systems, and there are complex commercial relationships for interconnection between the autonomous systems. Due to the commercial relationships, a transmission path of the internet is usually not the shortest path in the network. For example, transmission between two Asian nodes may be bypassed to Europe. This increases end-to-end latency. In addition, routing on the internet is unaware of path performance, and a forwarding failure or congestion on the path is difficult to avoid, or takes a long time to converge.

An internet overlay (Overlay) network technology is proposed in the industry, to resolve a non-optimal internet path problem. Network relay forwarding nodes (Point-of-Presence, PoP) are placed around data centers in different areas on the internet, and PoPs are connected and scheduled to each other. In this way, a new virtual overlay network is constructed on the basis of an existing public internet. Based on the overlay network, real-time service-oriented acceleration can be implemented through transmission according to a unified management configuration and data plane transmission protocol. The overlay network is also referred to as a real-time service acceleration network (Real-Time Network, RTN).

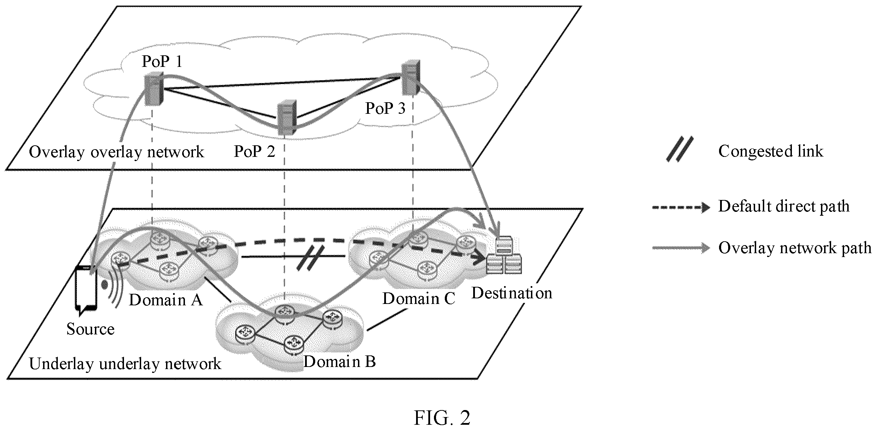

Refer to FIG. 2. FIG. 2 is a schematic diagram in which an overlay technology is applied to an internet according to an embodiment of this application. As shown in FIG. 2, a default link from a terminal to a destination node is a link indicated by a dashed line, namely, a cross-domain link directly crossing from a domain A to a domain C. However, the cross-domain link is heavily congested, resulting in deteriorated end-to-end performance. In the overlay technology, a PoP 1 is deployed in the domain A, a PoP 2 is deployed in a domain B, a PoP 3 is deployed in the domain C, and terminal traffic is transmitted to the PoP 1. On an overlay backbone network, routing from the PoP 1 to the PoP 3 is the PoP 1 to the PoP 2 to the PoP 3. This effectively bypasses a congested link between the domain A and the domain B and improves overall end-to-end performance.

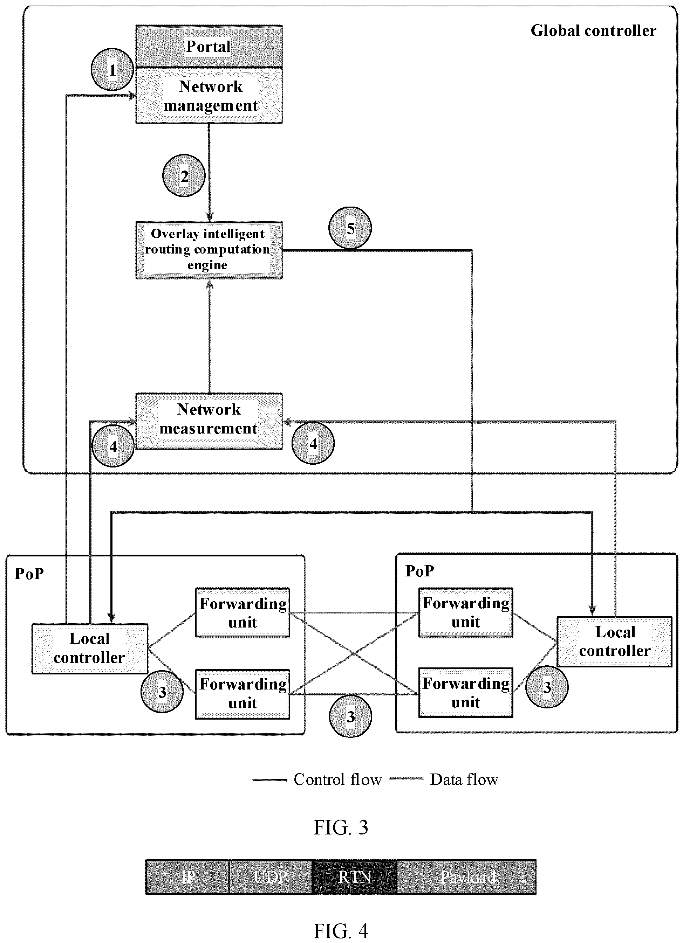

In terms of a system architecture, an existing RTN network includes two parts: a centralized global controller (management and control plane) and an overlay network formed by distributed PoP forwarding points (data plane). Refer to FIG. 3. FIG. 3 is a key operation process of an RTN network according to an embodiment of this application. As shown in FIG. 3, the operation process of the RTN network includes the following steps.

Step 1: A local controller inside a PoP registers with a global controller, and the global controller adds the PoP to an overlay network topology. In addition, a user can input service parameters such as a service attribute, a QoS requirement, and a priority to the global controller through a portal (Portal) to compute overlay intelligent routing.

Step 2: A management module of the global controller sends topology information of an overlay network to an overlay intelligent routing computation engine. When the overlay network topology changes (for example, a PoP is added or deleted), the management module of the global controller updates the topology to the overlay intelligent routing computation engine in real time.

In step 3, there are the local controller and several software forwarding units inside the PoP. Forwarding units of different PoPs communicate with each other through respective external elastic IP addresses (Elastic IP, EIP). To obtain a quality status of a link between PoPs, forwarding units in the PoPs periodically send a mutual detection packet, for example, send a mutual detection packet once every second, to collect an indicator such as latency, jitter, a packet loss rate, or a bandwidth capacity of the link between the PoPs, and report the indicator to the local controller of the PoP.

Step 4: After aggregating a measurement index sample of a path between the PoP and another PoP, the local controller of the PoP periodically reports measurement data to the global controller, for example, reports the measurement data to the global controller once every minute.

Step 5: For a differentiated service type, the overlay intelligent routing computation engine of the global controller computes specific end-to-end (End-to-end, E2E) overlay routing for each type of service based on RTN network topology, the measurement data, and the service parameter input by the user, and delivers a routing table to a local controller of each PoP. Then, the PoP loads the routing table to each local forwarding unit, to determine a forwarding path based on the routing table.

The preceding steps describe a complete process from measuring a network indicator to delivering overlay routing on the RTN network. It should be noted that the overlay routing of the RTN is PoP-level routing, that is, E2E routing is from a "source PoP" to a "destination PoP", and forwarding points on an intermediate path are PoPs. For example, in FIG. 2, PoP 1 to PoP 2 to PoP 3 are overlay routing from the PoP 1 to the PoP 3.

In actual application, a service client (for example, a mobile phone or a terminal computer) imports traffic to a PoP (the PoP is referred to as an access PoP) in the RTN network in a manner such as a software development kit (Software Development Kit, SDK), a domain name system (Domain Name System, DNS), or domain name redirection. An overlay packet header (namely, an RTN header) of the RTN network is added to the access PoP to form an RTN packet that can be forwarded between PoPs.

FIG. 4 is a schematic diagram of overlay packet encapsulation of an RTN according to an embodiment of this application. In FIG. 4, an RTN packet includes a payload (payload) and a conventional packet header, namely, an internet protocol (Internet Protocol, IP) header and a user datagram protocol (User Datagram Protocol, UDP) header. The RTN further includes an RTN header. The RTN packet is forwarded, through overlay routing of an RTN network, to a PoP connected to a destination terminal (a server or another client). A destination PoP strips the RTN header, recovers an original packet, and sends the packet to a final destination terminal. In this way, entire RTN network forwarding is completed.

Based on the preceding descriptions, it can be learned that the RTN shields routing restrictions on an underlay (underlay) network on an overlay network where PoPs are interconnected, intelligently computes optimal routing through closed-loop control, and implements overlay forwarding based on a proprietary protocol format of a data plane. This accelerates transmission on the backbone network, especially for real-time service traffic acceleration on a long-distance cross-border wide area network.

In some implementations, the RTN data plane can forward a packet by using a source routing (Source Routing, SR) forwarding technology. The source routing forwarding technology can globally optimize a network path by using a centralized controller and simplify forwarding status maintenance on an intermediate node.

Specifically, a source PoP fills complete overlay routing into an RTN packet header In the overlay routing, an ID of a PoP along the routing is written into a field of each SR forwarding point. After receiving the RTN packet, a forwarding unit of the PoP along the routing queries an ID of a next-hop PoP from an SR list of the RTN packet header and forwards the packet to the next-hop PoP.

It can be seen from an RTN architecture that, because the RTN is actually a virtual overlay network, an underlay (underlay) network at a lower layer of the RTN usually includes heterogeneous networks, for example, a public internet and a private line network. Therefore, an end-to-end RTN path usually spans a plurality of underlay network links. In addition, a public network based on an IP protocol stack is a network without deterministic assurance through resource management and control. As a result, RTN routing running on an overlay layer lacks expected steady-state quality assurance of a transmission indicator.

Therefore, in some cases, after a global controller of the RTN computes a forwarding path based on quality of an overlay path in a normal state, when the forwarding path is actually used to forward traffic, burst congestion may occur on a downstream underlay link, resulting in deteriorated quality of the forwarding path. Consequently, normal forwarding of the traffic is affected.

In view of this, an embodiment of this application provides a packet loss management method. A segment network enhancement control technology is constructed to improve transmission quality of an end-to-end path, so that an expected deterministic effect can be achieved during execution of intelligent routing.

Specifically, the packet loss management method provided in embodiments of this application can be applied to any cross-domain long-distance network transmission scenario, and is not limited to a specific service, an ISP, a network link type (for example, a public internet or a private line), a communication protocol, and the like. Particularly, the method provided in embodiments of this application is especially applicable to improving packet forwarding quality of an RTN network for latency-sensitive service acceleration. Therefore, in embodiments, the RTN is used as a main carrier to describe the packet loss management method provided in embodiments.

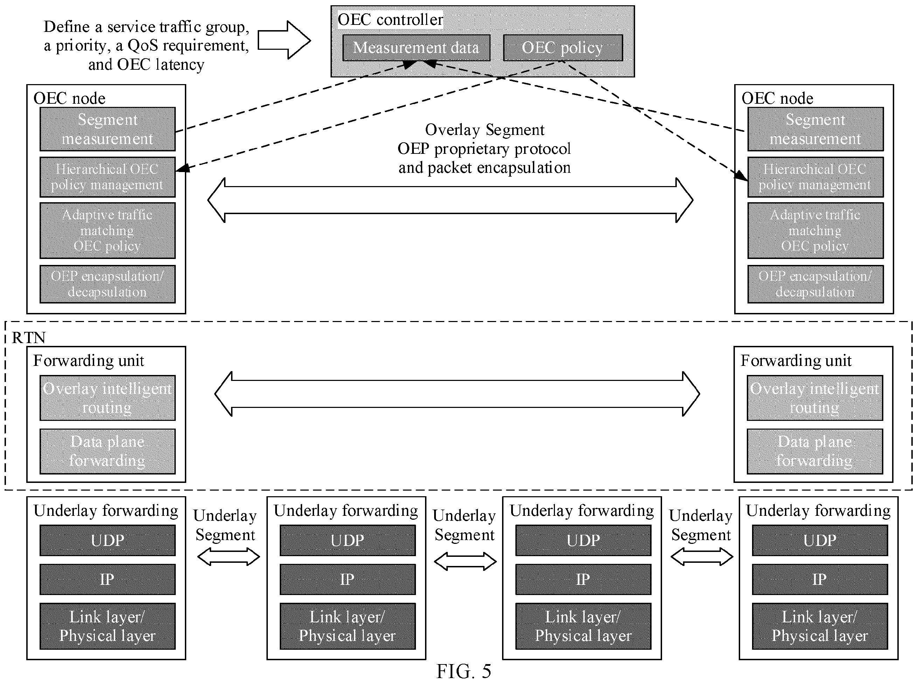

Refer to FIG. 5. FIG. 5 is a schematic diagram of a system architecture to which a packet loss management method is applied according to an embodiment of this application. As shown in FIG. 5, the system architecture to which the packet loss management method provided in embodiments is applied may be referred to as an overlay enhancement control (Overlay Enhancement Control, OEC) system architecture. With reference to FIG. 5, the following describes the OEC system architecture by using an example in which the OEC system architecture is carried on an RTN network.

As shown in FIG. 5, the OEC system architecture includes one OEC controller and a plurality of OEC nodes. The OEC controller is a control plane node, and the OEC node is an overlay data plane node. The OEC controller and the plurality of OEC nodes are software entities or software modules, that is, the OEC controller and the OEC nodes may be deployed on a physical device (forwarding unit) in the RTN network. For example, the OEC controller may be deployed on a global controller in the RTN network, and the OEC node may be deployed on a PoP in the RTN network. In addition, the physical device on the RTN network is deployed on an underlay network, and the physical device on the RTN network forwards a packet through the underlay network.

Specifically, the OEC controller is separately connected to the plurality of OEC nodes, and is configured to: compute a packet loss concealment policy executed by each OEC node, and deliver the packet loss concealment policy to the OEC node. During transmission of a service packet, the service packet is forwarded between the OEC nodes, and the OEC node forwards the service packet according to overlay enhancement protocol (Overlay Enhancement Protocol, OEP), and indicates the packet loss concealment policy that needs to be executed by each OEC node. The OEP protocol is embodied in a proprietary overlay packet format encapsulated by the OEC node in a service packet.

In FIG. 5, the OEC controller obtains a user-defined service requirement, for example, a service traffic group, a priority, a QoS requirement of a service or OEC latency, and a real-time link status uploaded by the OEC node, computes an OEC policy of each segment link on an end-to-end path, and delivers the OEC policy to the OEC node on a data plane. After receiving an RTN packet, the OEC node performs enhancement control on the RTN packet according to a corresponding OEC policy, encapsulates a corresponding OEP packet header, and sends the packet to a next-hop OEC node, that is, completes packet processing in a segment link of the OEC node. If the next-hop OEC node detects packet loss, the next-hop OEC node performs packet loss recovery according to an OEC policy used for the packet, to implement enhancement control effect at a segment link level.

For ease of understanding, the following describes in detail a packet loss management method provided in embodiments of this application from two aspects: delivering an OEC policy by a controller and executing the OEC policy by an OEC node in a packet forwarding process.

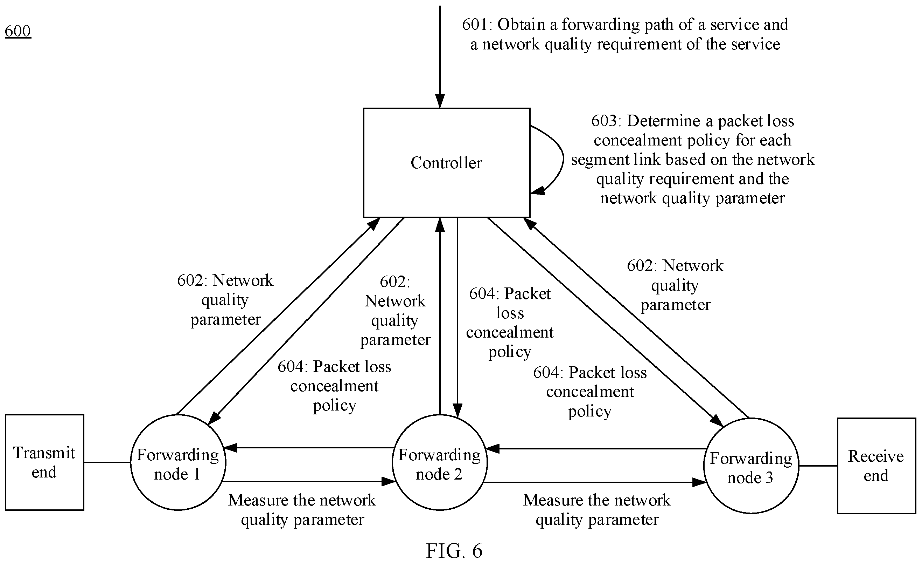

Refer to FIG. 6. FIG. 6 is a schematic flowchart of a packet loss management method 600 according to an embodiment of this application. As shown in FIG. 6, the packet loss management method 600 includes step 601 to step 604.

Step 601: A controller obtains a forwarding path of service traffic and a network quality requirement of the service traffic.

In this embodiment, service traffic between users needs to be forwarded between a plurality of forwarding nodes managed by the controller. For service traffic of different service types, different start addresses, or different destination addresses, there are usually different forwarding paths. The controller may obtain forwarding paths of various service traffic, to subsequently determine enhanced transmission control implemented on the forwarding paths. The forwarding path of the service traffic may be determined by the controller or a centralized controller in an RTN network based on a requirement of the service traffic and real-time quality of a network link, and details are not described herein again.

For example, as shown in FIG. 6, the service traffic is forwarded from a transmit end, passes through a forwarding node 1, a forwarding node 2, and a forwarding node 3, and finally arrives at a receive end. That is, the forwarding path of the service traffic is: the transmit end > the forwarding node 1 > the forwarding node 2 > the forwarding node 3 > the receive end.

In addition, the service traffic of different service types has different network quality requirements. The network quality requirement of the service traffic may be latency, a packet loss rate, jitter, and the like of the service traffic during network transmission. For example, when the service traffic is audio and video data transmitted in real time, the service traffic has a high latency requirement. When the service traffic is banking service traffic such as financial data, the service traffic has a high packet loss rate requirement.

In this embodiment, because enhanced transmission control is performed on each segment link on the forwarding path of the service traffic, the controller may first obtain the network quality requirement for transmitting the service traffic on the forwarding path, to determine, based on an overall network quality requirement of the service traffic, network quality that needs to be achieved on each segment link.

Step 602: The controller obtains network quality parameters of a plurality of segment links on the forwarding path, where each segment link in the plurality of segment links is a link between two neighboring forwarding nodes on the forwarding path.

After obtaining the forwarding path of the service traffic, the controller may determine a plurality of forwarding nodes on the forwarding path. The service traffic is sequentially forwarded by the plurality of forwarding nodes on the forwarding path, to implement transmission on the forwarding path. For example, a plurality of forwarding nodes on a forwarding path shown in FIG. 6 include the forwarding node 1, the forwarding node 2, and the forwarding node 3.

Based on the plurality of forwarding nodes on the forwarding path, the controller may determine the plurality of segment links on the forwarding path, where the plurality of segment links are used to form the forwarding path. Each segment link in the plurality of segment links is a link between two neighboring forwarding nodes on the forwarding path. For example, the forwarding path shown in FIG. 6 may include two segment links: a segment link 1 and a segment link 2. The segment link 1 is a link between the forwarding node 1 and the forwarding node 2, and the segment link 2 is a link between the forwarding node 2 and the forwarding node 3.

After determining the plurality of segment links on the forwarding path, the controller may obtain a network quality parameter of each segment link in the plurality of segment links. The network quality parameter of the segment link may be one or more of latency, a packet loss rate, a bandwidth capacity, and jitter on the segment link.

Optionally, the forwarding node managed by the controller may periodically measure network quality of a segment link between the forwarding node and another node, and upload a measured network quality parameter to the controller. In this way, the controller may obtain a network quality parameter that is of the segment link and that is uploaded by each forwarding node. Because there are a large quantity of forwarding nodes and segment links in actual network topology, the controller may obtain network quality parameters that are of the segment links and that are uploaded by the large quantity of forwarding nodes. The controller may determine, based on segment links included on each forwarding path, the network quality parameters of the plurality of segment links on the forwarding path from the network quality parameters uploaded by the forwarding nodes.

Specifically, the controller may obtain a network quality parameter set, where the network quality parameter set includes network quality parameters that are of segment links and that are uploaded by the plurality of forwarding nodes managed by the controller. The controller determines the network quality parameters of the plurality of segment links on the forwarding path from the network quality parameter set.

For example, the forwarding node 1 obtains, through measurement, that a packet loss rate for the segment link 1 between the forwarding node 1 and the forwarding node 2 is 3% and latency is 100 ms; and the forwarding node 1 sends an identifier, the packet loss rate 3%, and the latency 100 ms of the segment link 1 to the controller. The identifier of the segment link 1 may be an identifier of the forwarding node 1 and an identifier of the forwarding node 2, that is, identifiers of two forwarding nodes are used to represent a segment link between the two forwarding nodes. The forwarding node 3 obtains, through measurement, that a packet loss rate for the segment link 2 between the forwarding node 3 and the forwarding node 2 is 5% and latency is 70 ms; and the forwarding node 3 sends an identifier, the packet loss rate 5%, and the latency 70 ms of the segment link 2 to the controller.

Step 603: The controller determines, based on the network quality requirement and the network quality parameters, a packet loss concealment policy used when a packet loss occurs on each segment link in the plurality of segment links.

In this embodiment, the controller may determine, based on the network quality requirement of the service traffic and the network quality parameter of each segment link on the forwarding path, a packet loss concealment policy to be executed on each segment link on the forwarding path, so that each segment link on the forwarding path can meet the network quality requirement of the service traffic when a corresponding packet loss concealment policy is executed.

A packet loss concealment policy corresponding to a segment link indicates a processing policy used when a packet loss occurs in the segment link. For example, the packet loss concealment policy includes one or more of an ARQ policy, an FEC policy, and a multipath retransmission policy.

The ARQ policy means that, when a forwarding node on a segment link detects a packet loss or a data error, the forwarding node automatically sends, to a previous forwarding node, a request for retransmitting an error frame. The ARQ policy may have a corresponding policy parameter. For example, the policy parameter corresponding to the ARQ policy includes a quantity of automatic retransmission times, and the quantity of automatic retransmission times indicates a quantity of times that a forwarding node retransmits a lost packet when a data packet loss occurs.

The FEC policy means that a previous forwarding node on a segment link encodes data according to a specific algorithm, and sends the encoded data to a next forwarding node. The next forwarding node decodes the data according to a corresponding algorithm, so as to find and correct error data or lost data generated during transmission. A policy parameter corresponding to a group-based FEC policy may include an encoding scheme, a total quantity of packets, and a total quantity of source code packets. The total quantity of source code packets is a total quantity of packets loaded with actual to-be-transmitted data. The total quantity of packets is a sum of the total quantity of source code packets and a total quantity of redundant packets. The redundant packet is a packet of redundant information generated based on a feature of the actual to-be-transmitted data, and is used to recover a lost source code packet or an error source code packet. For example, the policy parameter corresponding to the FEC policy may include: The encoding scheme is Reed-solomon (Reed-solomon, RS) encoding, the total quantity of packets is 38, and the total quantity of source code packets is 36.

The multipath retransmission policy means that when a forwarding node sends a packet to a target forwarding node through one path and a packet error or loss occurs, the forwarding node resends the packet to the target forwarding node through another path (namely, a candidate path). A policy parameter corresponding to the multipath retransmission policy may include an outbound interface corresponding to one or more candidate paths.

Step 604: The controller sends the packet loss concealment policy to forwarding nodes on the plurality of segment links.

After the controller determines a packet loss concealment policy for each segment link on the forwarding path, the controller may send, to forwarding nodes on each segment link, the packet loss concealment policy corresponding to the segment link, so that the forwarding node executes the packet loss concealment policy corresponding to the segment link when forwarding the service traffic.

Optionally, in a process in which the forwarding node forwards the service traffic, for any segment link, a forwarding node (namely, a head node on the segment link) responsible for forwarding the service traffic on the segment link may write, to a packet of the service traffic, a packet loss concealment policy to be executed on the segment link; and a forwarding node (namely, an end node on the segment link) responsible for receiving the service traffic on the segment link executes a packet loss concealment policy indicated in the packet of the service traffic. Therefore, in this embodiment, the controller may send the packet loss concealment policy corresponding to each segment link to the head node corresponding to the segment link, so that a forwarding node serving as a head node on the segment link indicates the packet loss concealment policy for the segment link in the packet of the service traffic.

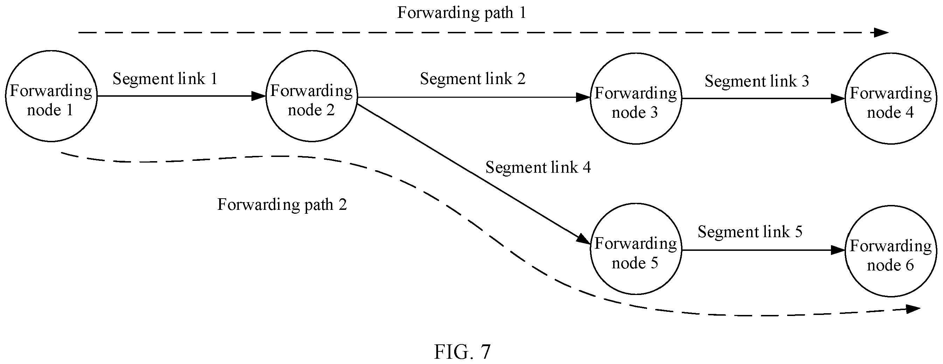

For example, refer to FIG. 7. FIG. 7 is a schematic diagram of a forwarding path according to this embodiment of this application. FIG. 7 includes two forwarding paths: a forwarding path 1 and a forwarding path 2. Forwarding nodes on the forwarding path 1 include a forwarding node 1, a forwarding node 2, a forwarding node 3, and a forwarding node 4. Forwarding nodes on the forwarding path 2 include the forwarding node 1, the forwarding node 2, a forwarding node 5, and a forwarding node 6.

For the forwarding path 1, the controller determines that packet loss concealment policies used by a segment link 1, a segment link 2, and a segment link 3 on the forwarding path 1 are a packet loss concealment policy 1, a packet loss concealment policy 2, and a packet loss concealment policy 3 respectively. Therefore, the controller sends, to a head node on each segment link, the packet loss concealment policy corresponding to each segment link. To be specific, the controller sends the packet loss concealment policy 1 corresponding to the segment link 1 to the forwarding node 1; the controller sends the packet loss concealment policy 2 corresponding to the segment link 2 to the forwarding node 2; and the controller sends the packet loss concealment policy 3 corresponding to the segment link 3 to the forwarding node 3.

For the forwarding path 2, the controller determines that packet loss concealment policies used by the segment link 1, a segment link 4, and a segment link 5 on the forwarding path 2 are a packet loss concealment policy 4, a packet loss concealment policy 5, and a packet loss concealment policy 6 respectively. Therefore, the controller sends, to a head node on each segment link, the packet loss concealment policy corresponding to each segment link. To be specific, the controller sends the packet loss concealment policy 4 corresponding to the segment link 1 to the forwarding node 1; the controller sends the packet loss concealment policy 5 corresponding to the segment link 4 to the forwarding node 2; and the controller sends the packet loss concealment policy 6 corresponding to the segment link 5 to the forwarding node 5.

It should be noted that, although the forwarding node 1 and the forwarding node 2 receive a plurality of packet loss concealment policies, a different packet loss concealment policy corresponds to a different forwarding path. To be specific, when the forwarding path of the service traffic is the forwarding path 1, the forwarding node 1 may determine the packet loss concealment policy 1 corresponding to the segment link 1. When the forwarding path of the service traffic is the forwarding path 2, the forwarding node 1 may determine the packet loss concealment policy 4 corresponding to the segment link 1.

In this solution, the controller determines, based on the network quality requirement of the service traffic and the network quality parameter of each segment link on the forwarding path of the service traffic, a packet loss concealment policy that needs to be executed on each segment link on the forwarding path, and delivers the packet loss concealment policy for each segment link to the forwarding node, and the forwarding node executes the corresponding packet loss concealment policy. Enhanced transmission control is performed on each segment link on the forwarding path, so that a packet loss rate on each segment link can be ensured, to ensure a packet loss rate on an entire forwarding path and improve transmission quality of an end-to-end path.

The foregoing describes a process in which the controller determines the packet loss concealment policy for each segment link on the forwarding path. The following describes how the controller determines a specific packet loss concealment policy based on the network quality requirement of the service traffic and the network quality parameter of the segment link.

After obtaining the network quality requirement of the service traffic and the network quality parameter of each segment link on the forwarding path of the service traffic, the controller may determine, based on the packet loss rate in the network quality requirement, a maximum allowed packet loss rate for each segment link in the plurality of segment links.

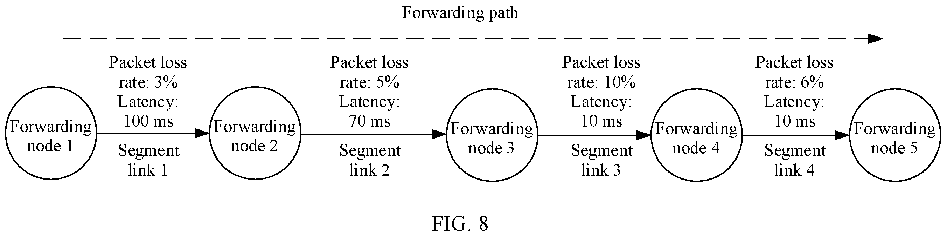

For example, refer to FIG. 8. FIG. 8 is a schematic diagram of network quality parameters of a plurality of segment links on a forwarding path according to this embodiment of this application. As shown in FIG. 8, the forwarding path includes a forwarding node 1, a forwarding node 2, a forwarding node 3, a forwarding node 4, and a forwarding node 5. A packet loss rate for a segment link 1 between the forwarding node 1 and the forwarding node 2 is 3% and latency is 100 ms. A packet loss rate for a segment link 2 between the forwarding node 2 and the forwarding node 3 is 5% and latency is 70 ms. A packet loss rate for a segment link 3 between the forwarding node 3 and the forwarding node 4 is 10% and latency is 10 ms. A packet loss rate for a segment link 4 between the forwarding node 4 and the forwarding node 5 is 6% and latency is 10 ms.

It is assumed that the controller determines, based on the network quality requirement of the service traffic, that a packet loss rate q of the forwarding path shown in FIG. 8 is 3%. In this case, the controller may determine a maximum allowed packet loss rate for each segment link. Specifically, the packet loss rate q may be split into maximum allowed packet loss rates for segment links on the forwarding path. In a possible splitting manner, the controller may control the maximum allowed packet loss rates for the segment links to be the same, and the maximum allowed packet loss rates for the segment links are p. In this case, a relationship between the packet loss rate q and the maximum allowed packet loss rates p for the segment links may be shown in Formula 1.

$$1 - q = (1 - p)^4 \qquad\qquad \text{Formula 1}$$

The maximum packet loss rate p allowed by each segment link may be obtained through computation according to Formula 1: $p = 1 - \sqrt[4]{1 - q} = 1 - \sqrt[4]{1 - 0.03} = 0.76\%$ .

To be specific, after a packet loss concealment policy is applied to each segment link on the forwarding path, the maximum allowed packet loss rate for each segment link is 0.76%.

After determining a maximum allowed packet loss rate for each segment link in a plurality of segment links on the forwarding path, the controller may determine, based on the maximum allowed packet loss rate for each segment link and an actual packet loss rate that is for each segment link and that is indicated by the network quality parameter, a packet loss concealment policy for each segment link in the plurality of segment links. In this way, after a corresponding packet loss concealment policy is executed on each segment link, an expected packet loss rate for each segment link is less than or equal to the maximum allowed packet loss rate.

Specifically, the controller may determine, based on effect of executing different packet loss concealment policies on each segment link, an expected packet loss rate corresponding to a case in which various types of packet loss concealment policies are executed on each segment link. Then, the controller selects, for each segment link, a packet loss concealment policy that meets a requirement from the various types of packet loss concealment policies based on the expected packet loss rate corresponding to a case in which the various types of packet loss concealment policies are executed on each segment link.

Simply speaking, for a segment link with a high actual packet loss rate, the controller uses a packet loss concealment policy with good packet loss concealment effect on the segment link. For a segment link with a low actual packet loss rate, the controller uses a packet loss concealment policy with weak packet loss concealment effect or does not use a packet loss concealment policy (that is, the packet loss concealment policy is null) on the segment link.

Optionally, the controller may select a packet loss concealment policy with lower latency as much as possible on a premise that the expected packet loss rate for the segment link is less than or equal to the maximum allowed packet loss rate.

Specifically, the controller determines, based on the maximum allowed packet loss rate for each segment link and the actual packet loss rate that is for each segment link and that is indicated by the network quality parameter, a packet loss concealment policy set corresponding to each segment link in the plurality of segment links, where the packet loss concealment policy set includes one or more packet loss concealment policies that meet a maximum packet loss rate requirement. For example, for a segment link, an actual packet loss rate for the segment link is 2%, and a maximum allowed packet loss rate for the segment link is 1%. In a case in which both the ARQ policy and the FEC policy enable an expected packet loss rate for the segment link to be less than 1%, a packet loss concealment policy set of the segment link includes the ARQ policy and the FEC policy.

Then, the controller determines, based on actual latency that is of each segment link and that is indicated by the network quality parameter, a packet loss concealment policy with the lowest latency from the packet loss concealment policy set corresponding to each segment link.

Generally, during execution of the ARQ policy, an end node on the segment link needs to send a retransmission request to a head node, and then the head node resends a packet to the end node based on the retransmission request. Therefore, latency for the ARQ policy may be generally considered to be twice actual transmission latency for the segment link. The latency for the FEC policy is a duration required for the end node on the segment link to decode and repair a packet based on the FEC encoding scheme. The latency for the FEC policy is usually fixed.

Therefore, the controller may determine, based on the actual latency for each segment link, specific latency of executing a different packet loss concealment policy on each segment link, to determine the packet loss concealment policy with the lowest latency from the packet loss concealment policy set corresponding to each segment link.

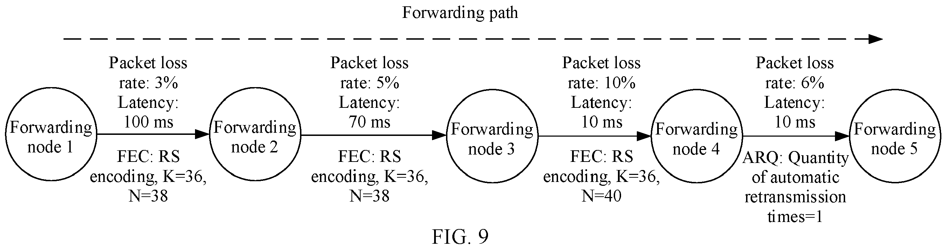

For example, refer to FIG. 9. FIG. 9 is a schematic diagram of the packet loss concealment policy used on the segment link according to this embodiment of this application. As shown in FIG. 9, it is assumed that latency of a segment link for the FEC policy is 30 ms, and latency for the ARQ policy is twice transmission latency (Latency) of a current segment link.

For the segment link between the forwarding node 1 and the forwarding node 2, latency of the segment link for the ARQ policy is 200 ms and is far higher than 30 ms for the FEC policy. Therefore, the controller determines that the FEC policy is used on the segment link. A specific parameter is: A quantity of source code packets in a transport block (block) is 36, a quantity of repaired packets is 2, a total quantity of packets is 38, and redundancy is 2/38=5.3%. This means that 3% of segment packet loss can be repaired.

Similarly, a same FEC policy as that of the segment link is used on the segment link between the forwarding node 2 and the forwarding node 3.

For the segment link between the forwarding node 3 and the forwarding node 4, although latency overheads for the ARQ policy are 20 ms and are lower than latency overheads 30 ms for the FEC policy, an upper limit of a packet loss rate that can be repaired according to the ARQ policy is 10%*10%=1 %, and is higher than an upper limit 0.76% of an expected packet loss rate for the segment link. Therefore, the FEC policy is still used on the segment link between the forwarding node 3 and the forwarding node 4.

For the segment link between the forwarding node 4 and the forwarding node 5, an upper limit of a packet loss rate that can be repaired according to the ARQ policy is 6%*6%=0.36%, and meets an expected packet loss rate requirement of the segment link, and latency overheads for the ARQ are 20 ms and are better than 30 ms for the FEC policy. Therefore, the controller may determine that the ARQ policy is used on the segment link between the forwarding node 4 and the forwarding node 5, and a quantity of automatic retransmission times is 1.

It should be noted that, the foregoing embodiment describes a manner in which the controller computes the packet loss concealment policy used on each segment link. However, in an actual application, there is no unique manner in which the controller computes the packet loss concealment policy used on each segment link. Different computation manners may be used in a specific deployment scenario based on an actual network quality parameter of the segment link, and details are not described herein again.

The foregoing describes a process in which the controller computes the packet loss concealment policy used on each segment link on the forwarding path, and delivers the packet loss concealment policy to a forwarding node on the forwarding path. The following describes in detail a process in which the forwarding node on each segment link on the forwarding path executes a packet loss concealment policy when forwarding service traffic.

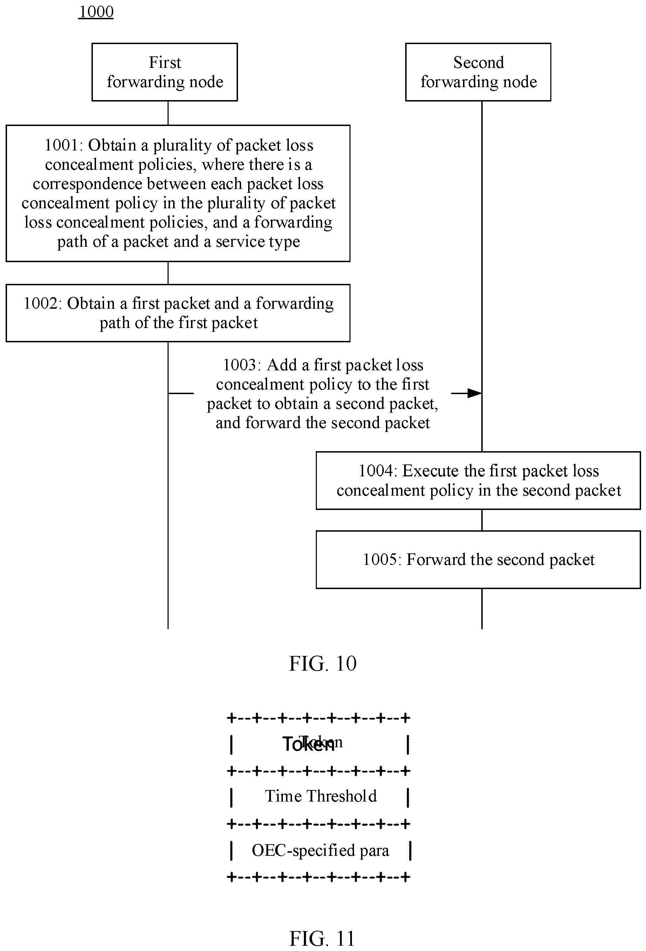

Refer to FIG. 10. FIG. 10 is a schematic flowchart of a packet loss management method 1000 according to an embodiment of this application. As shown in FIG. 10, the packet loss management method 1000 includes step 1001 to step 1005.

Step 1001: A first forwarding node obtains a plurality of packet loss concealment policies, where there is a correspondence between each packet loss concealment policy in the plurality of packet loss concealment policies, and a forwarding path of a packet and a service type.

In this embodiment, the plurality of packet loss concealment policies obtained by the first forwarding node may be delivered by a controller that manages the first forwarding node. The controller obtains, through computation according to the foregoing method 600, a packet loss concealment policy for a segment link on a forwarding path on which the first forwarding node is located, and delivers the packet loss concealment policy for the segment link to the first forwarding node. It may be understood that the first forwarding node may be located on different forwarding paths, and types of service traffic forwarded on a same forwarding path may also be different. However, the packet loss concealment policy is related to the forwarding path and the type of the service traffic. Therefore, the first forwarding node may receive the plurality of packet loss concealment policies delivered by the controller. In addition, there is a correspondence between each packet loss concealment policy in the plurality of packet loss concealment policies obtained by the first forwarding node, and the forwarding path of the packet and the service type.

Optionally, the first forwarding node may also obtain a plurality of packet loss concealment policies from another forwarding node. For example, after the controller delivers packet loss concealment policies to forwarding nodes directly connected to the controller, these forwarding nodes are responsible for forwarding the packet loss concealment policies, so that the packet loss concealment policies can spread between the plurality of forwarding nodes.

Step 1002: The first forwarding node obtains a first packet and a forwarding path of the first packet.

In a process of forwarding the service traffic, the first forwarding node may obtain the first packet that belongs to a type of service traffic. In addition, the first forwarding node may determine, based on information in the first packet, the forwarding path used to forward the first packet. For example, the first forwarding node may determine, based on 5-tuple information in the first packet, the forwarding path used to forward the first packet. The 5-tuple information in the first packet includes a source address, a destination address, a source port, a destination port, and a protocol number.

A forwarding path of the service traffic may be determined by the controller or a centralized controller in an RTN network based on a requirement of the service traffic and real-time quality of a network link, and then delivered to the first forwarding node.

Step 1003: The first forwarding node adds a first packet loss concealment policy to the first packet to obtain a second packet, and forwards the second packet to a second forwarding node based on the forwarding path.

The first packet loss concealment policy is determined by the first forwarding node from the plurality of packet loss concealment policies of the first forwarding node based on a service type of the first packet and the forwarding path. The first packet loss concealment policy indicates a packet loss concealment policy used when a packet loss occurs on a segment link between the first forwarding node and the second forwarding node. Because there is a correspondence between each packet loss concealment policy in the plurality of packet loss concealment policies obtained by the first forwarding node, and the forwarding path of the packet and the service type, based on the service type of the first packet and the forwarding path, the first forwarding node may determine, from the plurality of packet loss concealment policies, a packet loss concealment policy uniquely corresponding to the first packet, namely, the foregoing first packet loss concealment policy.

The service type of the first packet may be carried in a specific field of the first packet. The first forwarding node may determine the service type of the first packet by parsing the first packet. For example, the first forwarding node may determine the service type of the first packet as a real-time communication (Real Time Communication, RTC) service, a hyper text transfer protocol (Hyper Text Transfer Protocol, HTTP) service, or a file sync (file sync) service.

Optionally, the first packet loss concealment policy may include one or more of an ARQ policy, an FEC policy, and a multipath retransmission policy. In a process in which the first forwarding node adds the first packet loss concealment policy to the first packet, the first forwarding node may add a policy type corresponding to the first packet loss concealment policy and a policy parameter corresponding to the first packet loss concealment policy. For example, when the first packet loss concealment policy is the ARQ policy, the policy parameter corresponding to the first packet loss concealment policy may include a quantity of automatic retransmission times. When the first packet loss concealment policy is the FEC policy, the policy parameter corresponding to the first packet loss concealment policy may include an encoding scheme, a total quantity of packets, and a total quantity of source code packets. When the first packet loss concealment policy is the multipath retransmission policy, the policy parameter corresponding to the first packet loss concealment policy may include a packet retransmission path.

It may be understood that, compared with a solution in which a forwarding node directly forwards a packet without executing a packet loss concealment policy, a solution in which a forwarding node on a forwarding path executes a packet loss concealment policy usually takes extra time. Service traffic of specific service types has a high latency requirement. For example, some real-time voice services or real-time video services have a high latency requirement. Once transmission latency of a service packet reaches a specific threshold, the service packet is discarded and cannot be used.

To ensure that when the forwarding node executes the packet loss concealment policy, timely packet forwarding is not affected due to excessively long execution time of the packet loss concealment policy, this embodiment provides a latency threshold for executing the packet loss concealment policy. When the forwarding node on the forwarding path finds that duration for executing the packet loss concealment policy is greater than the latency threshold, the forwarding node does not continue to execute the packet loss concealment policy, but directly forwards the packet to a next-hop node.

Optionally, before forwarding the first packet, the first forwarding node may determine, based on the service type of the first packet, a latency threshold of the first packet. The latency threshold indicates duration in which the forwarding node on the forwarding path is allowed to execute the packet loss concealment policy. Then, the first forwarding node adds the first packet loss concealment policy and the latency threshold to the first packet, to obtain the second packet.

Because service traffic of different types has different latency requirements, the first forwarding node may determine, based on the service type of the first packet, the latency threshold corresponding to the first packet. Specifically, the first forwarding node may determine maximum allowed transmission latency for transmitting the first packet and actual transmission latency for forwarding the first packet based on the forwarding path, to obtain, by subtracting the actual transmission latency from the maximum transmission latency, the latency threshold corresponding to the first packet. For example, it is assumed that the maximum allowed transmission latency for the first packet is 100 ms, and the actual transmission latency for transmitting the first packet in a network is 50 ms. In this case, the latency threshold of the first packet may be set to 40 ms or 50 ms.

Simply speaking, the forwarding node on the forwarding path determines a latency threshold in the packet before executing the packet loss concealment policy. If time required by the forwarding node to execute the packet loss concealment policy is greater than the latency threshold in the packet, the forwarding node directly forwards the packet without executing the packet loss concealment policy. If time required by the forwarding node to execute the packet loss concealment policy is less than or equal to the latency threshold in the packet, the forwarding node may execute the packet loss concealment policy.

Step 1004: The second forwarding node executes the first packet loss concealment policy in the second packet.

After the second forwarding node receives the second packet sent by the first forwarding node, the second forwarding node parses the second packet, and executes the first packet loss concealment policy in the second packet when a packet loss occurs, to implement packet loss concealment control.

For example, when the first packet loss concealment policy in the second packet is the ARQ policy, the second forwarding node may send an automatic repeat request to the first forwarding node based on the quantity of automatic repeat times indicated by the first packet loss concealment policy in the second packet, to indicate the first forwarding node to resend a lost packet.

For another example, when the first packet loss concealment policy in the second packet is the FEC policy, the second forwarding node may decode the received second packet based on the encoding scheme indicated by the first packet loss concealment policy in the second packet, to recover a lost packet.

Step 1005: The second forwarding node forwards the second packet.

Optionally, when the second forwarding node is the last forwarding node on the forwarding path, the second forwarding node may not add a packet loss concealment policy to the second packet, but directly forward the packet loss concealment policy to a destination address.

When the second forwarding node is not the last forwarding node on the forwarding path, the second forwarding node also needs to add a packet loss concealment policy to the second packet, to indicate a next-hop forwarding node of the second forwarding node to execute a corresponding packet loss concealment policy.

Similarly to a process in which the first forwarding node adds the packet loss concealment policy, in the following process, the second forwarding node may obtain a plurality of packet loss concealment policies, and there is a correspondence between each packet loss concealment policy in the plurality of packet loss concealment policies, and a forwarding path of a packet and a service type. The second forwarding node obtains a forwarding path of the second packet. Then, the second forwarding node adds a second packet loss concealment policy to the second packet to obtain a third packet, and forwards the third packet to a third forwarding node based on the forwarding path.

The second packet loss concealment policy is determined by the second forwarding node from the plurality of packet loss concealment policies based on the service type of the first packet and the forwarding path. The second packet loss concealment policy indicates a packet loss concealment policy used when a packet loss occurs on a segment link between the second forwarding node and the third forwarding node.

In this step, a manner in which the second forwarding node obtains the plurality of packet loss concealment policies and determines, from the plurality of packet loss concealment policies, a packet loss concealment policy to be added to the packet is similar to a manner in which the first forwarding node obtains the packet loss concealment policy and adds the packet loss concealment policy. For details, refer to the foregoing steps 1001 to 1003, and details are not described herein again.

Optionally, the second packet received by the second forwarding node may further include a first latency threshold, and the first latency threshold indicates duration in which a forwarding node on the forwarding path is allowed to execute a packet loss concealment policy. The first latency threshold is added by the first forwarding node to the second packet based on the service type of the packet.

After the second forwarding node executes the first packet loss concealment policy indicated in the first packet, the second forwarding node may update the first latency threshold in the first packet based on duration for executing the first packet loss concealment policy. A corresponding packet loss concealment policy is added to the first packet, so as to obtain the second packet. For example, it is assumed that the first latency threshold in the first packet is 50 ms, and duration in which the second forwarding node executes the first packet loss concealment policy is 10 ms. In this case, the second forwarding node may update the first latency threshold in the first packet to 40 ms. Then, the second forwarding node forwards the updated first packet.

Simply speaking, after the second forwarding node completely executes the first packet loss concealment policy, the second forwarding node consumes a part of duration in which a packet loss concealment policy is allowed to be executed. Therefore, the second forwarding node needs to update the first latency threshold in the first packet, that is, the duration in which the second forwarding node executes the first packet loss concealment policy is subtracted from the first latency threshold.

In a possible embodiment, the second forwarding node may receive a fourth packet. The fourth packet includes a third packet loss concealment policy and a second latency threshold. The second latency threshold indicates duration in which a forwarding node on the forwarding path is allowed to execute a packet loss concealment policy. The second forwarding node executes the third packet loss concealment policy, and determines a difference between the second latency threshold and duration for executing the third packet loss concealment policy. Then, the second forwarding node determines a fourth packet loss concealment policy based on a service type of the second packet and a forwarding path. The fourth packet loss concealment policy indicates a packet loss concealment policy used when a packet loss occurs on a segment link between the second forwarding node and a fourth forwarding node. The fourth forwarding node is a forwarding node behind the second forwarding node on the forwarding path of the second packet; that is, the fourth forwarding node is a downstream node on the segment link, and the second forwarding node is an upstream node on the segment link. The second forwarding node forwards an updated second packet to the fourth forwarding node based on a fact that duration for executing the fourth packet loss concealment policy is greater than the difference. The updated second packet is obtained based on the second packet, and the updated second packet does not include a packet loss concealment policy.

In other words, after a forwarding node receives a packet that includes a packet loss concealment policy and a latency threshold, the forwarding node first executes a corresponding packet loss concealment policy in the packet, and computes a difference between the latency threshold in the packet and duration in which the forwarding node executes the packet loss concealment policy. Then, the forwarding node determines a packet loss concealment policy that needs to be executed by a next-hop forwarding node, and determines whether duration for executing the packet loss concealment policy by the next-hop forwarding node is greater than the obtained latency threshold difference. If the duration required by the next-hop forwarding node to execute the packet loss concealment policy is greater than the latency threshold difference, the forwarding node does not carry the packet loss concealment policy in the packet, but directly forwards an original packet to a next-hop forwarding node.

It can be ensured by setting a latency threshold that a forwarding node on a forwarding path takes an excessively long time to execute a packet loss concealment policy, and a latency requirement of service traffic can be met.

The foregoing describes a process in which a forwarding node adds a packet loss concealment policy to a packet, so that a downstream forwarding node executes the packet loss concealment policy. For ease of understanding, the following describes in detail a manner in which the forwarding node adds the packet loss concealment policy to the packet.

In this embodiment, forwarding nodes may implement enhancement control on an original packet according to a proprietary overlay protocol, namely, an OEP protocol. Specifically, the forwarding node may encapsulate an OEP packet header into the original packet. For example, the foregoing first forwarding node may encapsulate an OEP packet header into the first packet, and the OEP packet header may include the first packet loss concealment policy and the latency threshold.

Refer to FIG. 11. FIG. 11 is a schematic diagram of a format of the OEP packet header according to this embodiment of this application. As shown in FIG. 11, the OEP packet header includes a plurality of fields, which are respectively token (Token), a latency threshold (Time Threshold), and a packet loss concealment policy parameter (OEC-specified para). The following describes these fields in the OEP packet header in detail.

Token: Because the OEC policy may be updated periodically, in this embodiment, a "Toekn" field in an OEP packet may be used to record a version number of a currently used OEC policy, so as to avoid a conflict.

Time Threshold: Specifically, the user may set an OEC latency threshold for end-to-end transmission of a service packet in the controller in advance, to ensure timely transmission of the packet. Alternatively, the latency threshold may be determined by the controller or a forwarding node based on a latency requirement of service traffic and actual transmission latency of the service traffic. The latency threshold is recorded in the "Time Threshold" field. After forwarding nodes on a forwarding path execute a packet loss concealment policy, duration in which a current forwarding node executes the packet loss concealment policy is deducted from the time threshold field of the packet. When the packet arrives at a forwarding node, if duration indicated by the time threshold is insufficient to complete a current packet loss concealment policy, the packet is directly forwarded to a bearer network, and the OEC policy is not executed, to avoid overtime.

OEC-specified para: This field is a parameter of a packet loss concealment policy currently used by a segment link, for example, a packet sequence number and a quantity of retransmission times in the ARQ policy; an encoding and decoding method, a code block capacity, a quantity of source code, a code block sequence number, an internal index of a code block, and the like in the FEC policy; and a retransmission path in the multipath retransmission policy.

When a forwarding node uses the FEC policy as a packet loss concealment policy, a head node on a segment link encodes a to-be-transmitted packet in a corresponding encoding scheme, and obtains a plurality of encoded packets. The plurality of encoded packets may be divided into a plurality of transport blocks, and each transport block includes a specific quantity of encoded packets. For example, each transport block includes 38 encoded packets, and the 38 encoded packets include 36 source code packets and 2 redundant packets.

For example, it is assumed that the first forwarding node determines to use the FEC policy on a segment link between the first forwarding node and the second forwarding node. The first forwarding node encodes a to-be-transmitted packet to obtain an encoded packet, and sends the encoded packet to the second forwarding node. After receiving the encoded packet, the second forwarding node decodes the packet according to the FEC policy indicated in the packet, to recover a lost source code packet.

It may be understood that, for some FEC encoding and decoding schemes, a forwarding node usually needs to receive an abundant quantity of packets in an entire transport block before being able to decode a packet in the transport block, so as to recover a lost packet. For example, when the transport block includes 36 source code packets and two redundant packets, the forwarding node usually needs to receive 36 packets in a same transport block to decode the packets in the transport block.

Actually, for an encoding scheme corresponding to the FEC policy, a transport block obtained by encoding includes an original source code packet, that is, a packet in a transport block includes an original source code packet and a redundant packet generated through encoding computation. In some cases, a packet may not be lost in a packet transmission process, that is, a forwarding node may not actually need to perform a decoding operation according to an abundant quantity of packets in an entire transport block. Therefore, if the forwarding node decodes the packet in the transport block after receiving the abundant quantity of packets, and then sends the decoded packet to a next forwarding node, all packets of the entire transport block stay in the forwarding node. This increases data transmission latency.

In view of this, this embodiment proposes a manner of synchronous packet forwarding and buffering, to reduce the data transmission latency.

For example, in a process in which the second forwarding node receives a packet sent by the first forwarding node, the second forwarding node receives a third packet. The third packet is a source code packet, and the source code packet is a packet including to-be-transmitted data. If a packet loss concealment policy of the third packet is the FEC policy, the second forwarding node forwards the third packet, and locally stores a copy of the third packet, to recover a lost packet.

In other words, for a packet used as a source code packet, after receiving the packet, the second forwarding node locally buffers the packet and sends the packet to a next forwarding node, so that the packet can be transmitted to the next forwarding node in time, to avoid staying in the second forwarding node.

Similarly, in the process in which the second forwarding node receives the packet sent by the first forwarding node, the second forwarding node receives a fourth packet. The fourth packet is a repair packet, and the repair packet is used to recover a lost source code packet.

If the second forwarding node has obtained all source code packets in a transport block corresponding to the fourth packet, the fourth packet is discarded. To be specific, when the second forwarding node has obtained all the source code packets in the transport block, the second forwarding node no longer needs to recover the source code packets in the transport block based on the fourth packet. Therefore, the fourth packet may be discarded.

If the second forwarding node does not obtain all source code packets in a transport block corresponding to the fourth packet, and a quantity of packets that belong to the transport block and that are obtained by the second forwarding node is greater than or equal to a first threshold, a packet in the transport block is decoded based on the fourth packet, to recover a lost source code packet in the transport block. To be specific, when the second forwarding node does not receive all source code packets in the transport block, it may be considered that the second forwarding node loses some source code packets in the transport block. Therefore, when receiving abundant decoded packets, the second forwarding node decodes a packet in the transport block based on the fourth packet, to recover a lost source code packet.

If the second forwarding node does not obtain all source code packets in a transport block corresponding to the fourth packet, and a quantity of packets that belong to the transport block and that are obtained by the second forwarding node is less than a first threshold, the fourth packet is stored. To be specific, when the second forwarding node does not receive all the source code packets in the transport block, it may be considered that the second forwarding node may subsequently need to repair the source code packets. Therefore, when the second forwarding node does not receive abundant decoded packets, the second forwarding node stores the fourth packet, so that the packet in the transport block can be subsequently decoded based on the fourth packet, to recover a lost source code packet.

For ease of understanding, with reference to the accompanying drawings, the following describes in detail a manner of synchronous packet forwarding and buffering provided in this embodiment.

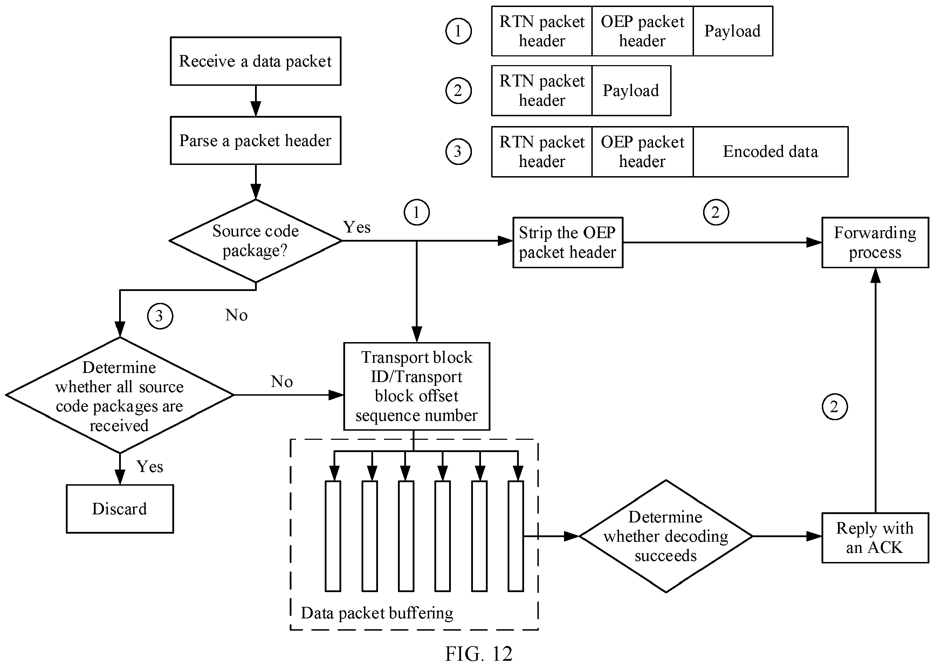

Refer to FIG. 12. FIG. 12 is a schematic flowchart of synchronous packet forwarding and buffering according to this embodiment of this application.

In a process shown in FIG. 12, after receiving a packet, a forwarding node first parses an FEC packet type field in an OEP packet header, to identify whether a current packet is a source code packet or a repair packet.

If the current packet is a source code packet, two steps are taken: 1. Based on a transport block in which the source code packet is located and an offset sequence number in the transport block, the source code packet is stored in a corresponding buffer location in a buffer module, for subsequent decoding of an overall transport block; and 2. An OEP packet header is stripped off from the source code packet, and the packet whose OEP packet header is stripped is forwarded (for example, a new OEP packet header is added, and then the packet is forwarded; or the packet whose OEP packet header is stripped is directly forwarded to a destination address.), without waiting for decoding of an entire transport block. In this way, normal forwarding of packets that have been correctly received is not affected.

If the current packet is a repair packet, the forwarding node first determines whether all source code packets in the transport block in which the modification packet is located have been received. If all source code packets have been received, decoding does not need to be continued and the repair packet is directly discarded. Otherwise, the repair packet is stored in a corresponding buffer location in a buffer module. After an abundant quantity of packets that can be decoded are received, the packet in the transport block is decoded, the lost source code packet is recovered, and an ACK packet is returned to an upstream node, to indicate that the source code packet is successfully repaired.

The foregoing describes a process in which the forwarding node executes a corresponding packet loss concealment policy in a process of forwarding a packet. It should be noted that, in addition to forwarding a packet and executing a corresponding packet loss concealment policy, the first forwarding node and the second forwarding node further need to measure real-time network quality of a segment link between the first forwarding node and another neighboring forwarding node, and upload the measured real-time network quality to the controller, so that the controller determines, based on the real-time quality of the segment link, a packet loss concealment policy corresponding to each segment link.

The first forwarding node is used as an example. The first forwarding node measures network quality of a segment link between the first forwarding node and another forwarding node, to obtain a network quality parameter of one or more segment links. The first forwarding node sends the network quality parameter of the one or more segment links to the controller. The network quality parameter of the one or more segment links includes one or more of latency, a packet loss rate, a bandwidth capacity, and jitter.

For ease of understanding, the following describes, with reference to specific examples, a packet loss management method provided in an embodiment in detail from a perspective of collaboration between a controller and forwarding nodes.

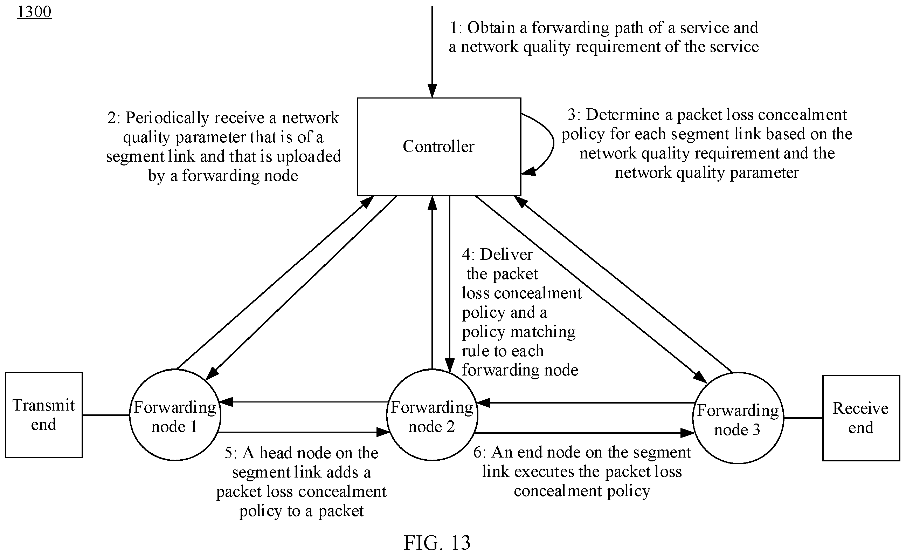

Refer to FIG. 13. FIG. 13 is a schematic flowchart of a packet loss management method 1300 according to an embodiment of this application. As shown in FIG. 13, the packet loss management method 1300 includes step 1 to step 6.

Step 1: A controller obtains a forwarding path of a service and a network quality requirement of the service.

Specifically, the controller may receive, through a northbound interface or a portal, a preset parameter input by a user. The preset parameter includes definition of various service types, a QoS requirement, an OEC latency threshold, and the like. A service type may be defined through several combinations of 5-tuple information or variable-length masks. The QoS requirement may include one or more parameters of expected end-to-end latency, a packet loss rate, and jitter. In addition, the controller may obtain forwarding paths of various service traffic.

Step 2: The controller periodically receives a network quality parameter that is of a segment link and that is uploaded by a forwarding node.

The network quality parameter of the segment link may include, for example, latency, a packet loss rate, a bandwidth capacity, and jitter.

Step 3: The controller determines a packet loss concealment policy for each segment link based on the network quality requirement and the network quality parameter.

Specifically, the controller may compute, based on information such as an end-to-end forwarding path of a specific service on a bearer network (for example, an RTN) (for example, in the RTN, E2E routing includes a source PoP, a destination PoP, and each traveling PoP), a QoS requirement of the service, a latency threshold, and a network quality parameter of each segment link on the forwarding path, a specific packet loss concealment policy used by a service packet on each segment link on the forwarding path.

Specifically, for all preset service types, the controller computes a packet loss concealment policy for each segment link on all end-to-end forwarding paths according to the foregoing method, to form a service OEC policy table.

Step 4: The controller delivers the packet loss concealment policy and a policy matching rule to each forwarding node.

Because there is a correspondence between a packet loss concealment policy, and a forwarding path and a service type, when sending a related packet loss concealment policy to each forwarding node, the controller further delivers a corresponding policy matching rule to the forwarding node, so that the forwarding node can determine a corresponding packet loss concealment policy based on a forwarding path of a packet and a service type. In this way, the forwarding node may locally form a service policy table according to the packet loss concealment policy and the policy matching rule that are delivered by the controller. The service policy table includes the policy matching rule and the corresponding packet loss concealment policy.

Step 5: A head node on the segment link adds a packet loss concealment policy to a packet.

After receiving an original packet from the bearer network (for example, the RTN), the head node on the segment link may match a local service OEC policy table based on a service type of the packet and a forwarding path, and obtain a packet loss concealment policy and a parameter that correspond to a next-hop segment link of the packet. In addition, the head node writes a related packet loss concealment policy parameter into an OEP protocol header of the packet, and then sends the packet to an end node on the segment link.

Step 6: The end node on the segment link executes the packet loss concealment policy.

After the packet reaches the end node on the segment link, the end node on the segment link parses a corresponding packet loss concealment policy and parameter from an OEP header of the packet and performs a feedback action in the packet loss concealment policy. For example, when the packet uses an ARQ policy, the end node on the segment link needs to construct a corresponding ACK packet and feed back the ACK packet to a transmit end OEC node. When the packet uses an FEC policy, the end node on the segment link needs to create a decoding buffer matrix based on an FEC-related parameter carried in the OEP header, and performs a decoding operation after receiving enough packets.

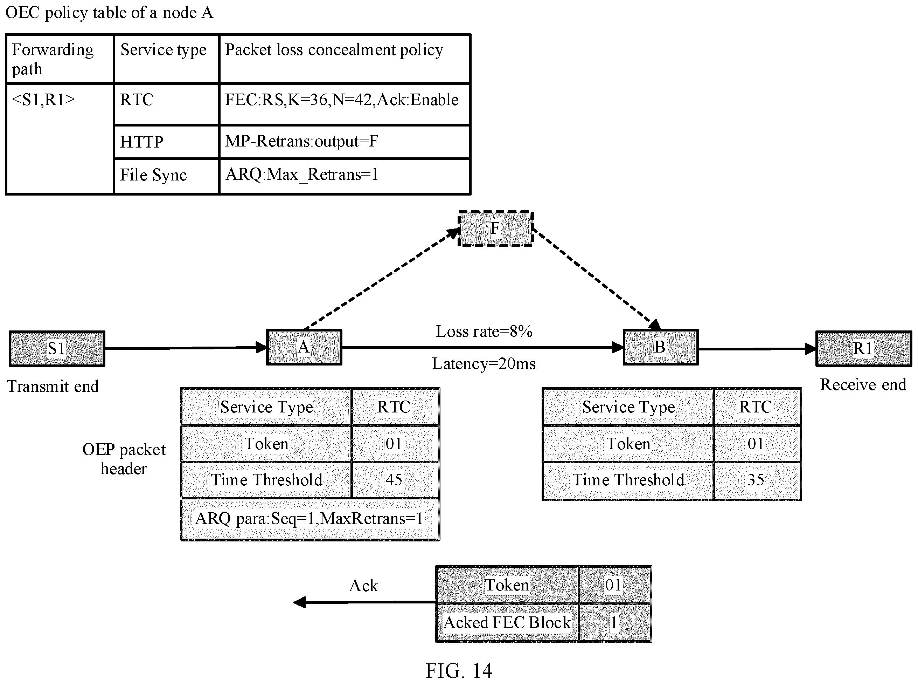

For example, refer to FIG. 14. FIG. 14 is a schematic flowchart of packet forwarding according to this embodiment of this application.

As shown in FIG. 14, a forwarding node A, a forwarding node B, and a forwarding node C are forwarding nodes on which an OEC module is deployed. FIG. 14 further describes a local OEC policy and parameter table of the forwarding node A and a parameter of an OEP packet header of a packet on a segment link.

The local OEC policy table indicates packet loss concealment policies corresponding to different service types when a forwarding path is <S1, RI>. Specifically, for an RTC service, a packet loss concealment policy is the FEC policy, a parameter of the FEC policy is RS encoding, a total quantity N of packets in each transport block is 38, a quantity K of source code packets is 36, and an ACK acknowledgment is required. For an HTTP service, a packet loss concealment policy is a multipath retransmission policy, and a retransmission path is a link between the forwarding node A and the forwarding node F. For a file sync service, a packet loss concealment policy is the ARQ policy, and a quantity of automatic retransmission times is 1.

When the packet is sent from a transmit end to the forwarding node A, the forwarding node A determines that a forwarding path of the packet is <S1, RI> and a service type is the RTC service, and determines, by matching the OEC policy table, that a packet loss concealment policy used by the forwarding node A on a next-hop segment link of the forwarding path is the FEC policy, a parameter of the FEC policy is RS encoding, a total quantity N of packets in each transport block is 38, and a quantity K of source code packets is 36, and an Ack acknowledgment is required. The forwarding node A performs RS encoding on the packet based on the foregoing FEC policy parameter, writes encoding information into a field of an OEP packet header, and sends the packet to the forwarding node B.

After receiving the packet, the forwarding node B parses the OEP packet header, and learns that the OEC policy used by the forwarding node A on a current segment link is RS encoding and an ACK is required. The forwarding node B decodes the packet based on an RS parameter recorded in the OEP packet header, and recovers an original packet. Then, the forwarding node B feeds back, to the upstream forwarding node A, ACK information indicating successful decoding.

Finally, with the support of an OEC segment enhancement technology, the original packet reaches a destination point of the bearer network (for example, the RTN), and the bearer network continues to send the packet to a destination receiver (client/server).

In addition, before executing the packet loss concealment policy indicated in the packet, the forwarding node needs to check whether a latency threshold in a current packet allows execution of a local policy. That is, the forwarding node needs to check whether a time threshold in a current OEP packet header is greater than expected time of a to-be-executed policy. If the latency threshold in the current packet is insufficient, to ensure timely packet forwarding and avoid a case in that the packet cannot be delivered on time due to OEC-controlled latency, the forwarding node gives up executing an expected policy, strips the OEP packet header, and recovers an original packet, and sends the original packet to an original bearer network (for example, the RTN) for forwarding.

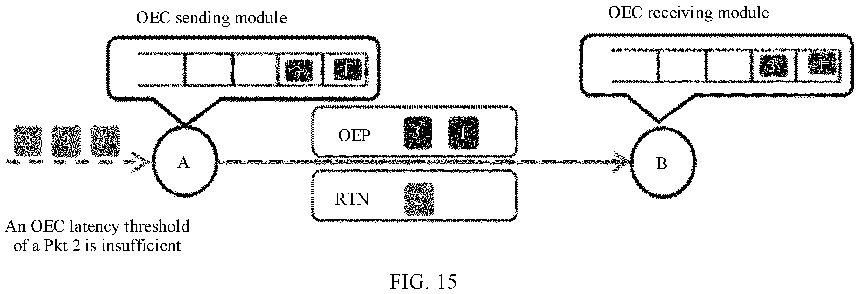

Refer to FIG. 15. FIG. 15 is a schematic diagram of packet forwarding according to this embodiment of this application. As shown in FIG. 15, after the forwarding node A receives three packets, if the forwarding node A finds that a time threshold of a packet 2 is insufficient, the forwarding node A forwards the packet through a common bearer network RTN without executing a packet loss concealment policy. This ensures real-time packet forwarding.

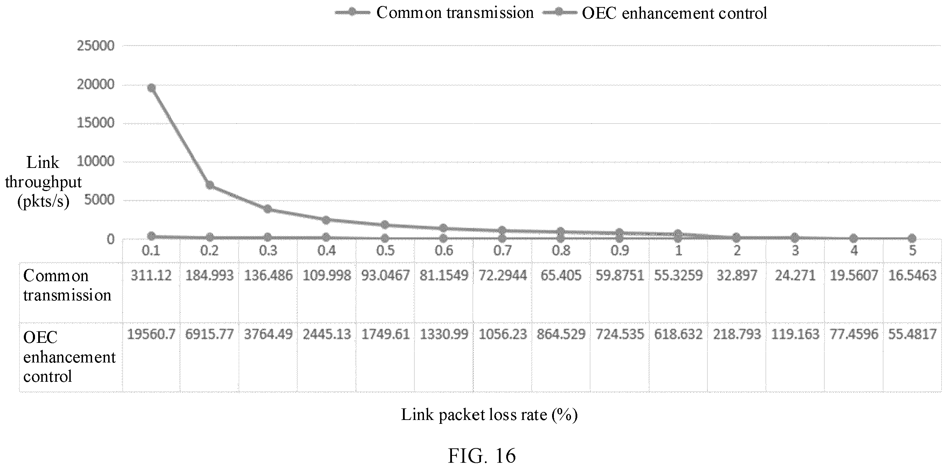

Refer to FIG. 16. FIG. 16 is a schematic diagram of improvement on a TCP service-based throughput of a client by using a packet loss management method according to this embodiment of this application. As shown in FIG. 16, in an experiment, a client TCP protocol stack uses a Cubic transmission control protocol, and an end-to-end link includes three segment links. By comparing impact of a common transmission method on a TCP throughput of the client at different segment link packet loss rates with those of the packet loss management method provided in embodiments of this application, it can be learned that, when a network packet loss rate is low, the packet loss management method provided in embodiments of this application can increase a device-side TCP throughput by dozens of times; and the packet loss management method provided in embodiments of this application can also increase a device-side throughput by more than three times even when the network packet loss rate deteriorates to 5%.

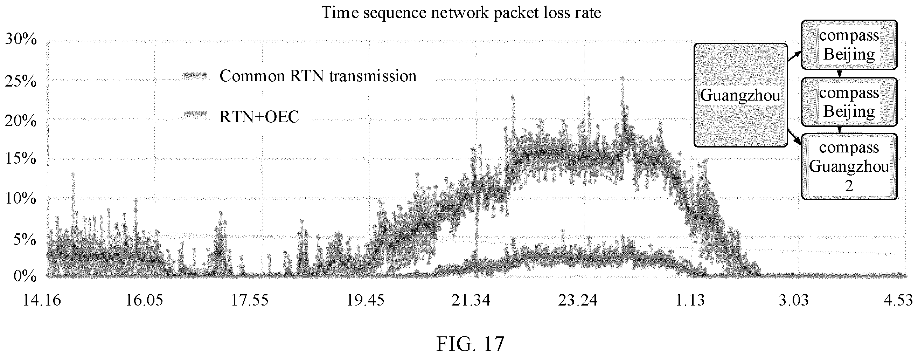

Refer to FIG. 17. FIG. 17 is a schematic diagram of optimization effect of a packet loss rate during transmission of a transnational link by using a packet loss management method according to this embodiment of this application. As shown in FIG. 17, packet loss rate data is collected for 12 consecutive hours on an RTN path "Guangzhou - Beijing - India - Guangzhou". It can be learned that, during evening service peak hours, for common RTN transmission, a packet loss rate during cross-country transmission obviously increases. However, after the packet loss management method provided in embodiments of this application is used, the packet loss rate can be reduced by about 10%, so that an end-to-end packet loss rate is less than 5%.

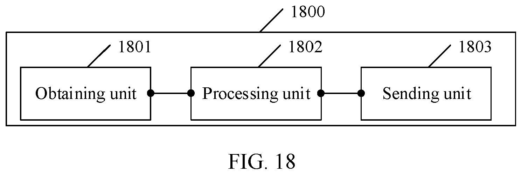

To implement the foregoing embodiments, this application further provides a network device. Refer to FIG. 18. FIG. 18 is a schematic diagram of a structure of a network device 1800 according to an embodiment of this application.

As shown in FIG. 18, the network device 1800 includes an obtaining unit 1801, a processing unit 1802, and a sending unit 1803. The obtaining unit 1801 is configured to obtain a plurality of packet loss concealment policies, where there is a correspondence between each packet loss concealment policy in the plurality of packet loss concealment policies, and a forwarding path of a packet and a service type corresponding to the packet. The obtaining unit 1801 is further configured to obtain a packet and a forwarding path of the packet. The processing unit 1802 is configured to add a first packet loss concealment policy to the packet to obtain an updated packet. The sending unit 1803 is configured to forward the updated packet to a second forwarding node based on the forwarding path. The first packet loss concealment policy is determined by a first forwarding node from the plurality of packet loss concealment policies based on the service type of the packet and the forwarding path. The first packet loss concealment policy indicates a packet loss concealment policy used when a packet loss occurs on a segment link between the first forwarding node and the second forwarding node.

In a possible implementation, the processing unit 1802 is further configured to: determine, based on the service type, a latency threshold of the packet, where the latency threshold indicates duration in which a forwarding node on the forwarding path is allowed to execute a packet loss concealment policy; and add, by using the first forwarding node, the first packet loss concealment policy and the latency threshold to the packet, to obtain the updated packet.

In a possible implementation, the processing unit 1802 is further configured to measure network quality of a segment link between the first forwarding node and another forwarding node, to obtain a network quality parameter of one or more segment links.

The sending unit 1803 is further configured to send the network quality parameter of the one or more segment links to a controller.

In a possible implementation, the network quality parameter of the one or more segment links includes one or more of latency, a packet loss rate, a bandwidth capacity, and jitter.

In a possible implementation, the sending unit is configured to encapsulate a first packet header into the packet, where the first packet header carries the first packet loss concealment policy.

In a possible implementation, the first packet header further includes an execution parameter of the first packet loss concealment policy. If the first packet loss concealment policy is an automatic repeat request ARQ policy, the execution parameter includes a quantity of automatic retransmission times. Alternatively, if the first packet loss concealment policy is a forward error correction FEC policy, the execution parameter includes an encoding scheme, a total quantity of packets, and a total quantity of source code packets. Alternatively, if the first packet loss concealment policy is a multipath retransmission policy, the execution parameter includes a packet retransmission path.

In another possible embodiment, an obtaining unit 1801 is configured to receive a first packet sent by a first forwarding node, where the first packet includes a first packet loss concealment policy. A processing unit 1802 is configured to execute the first packet loss concealment policy in the first packet, where the first packet loss concealment policy is determined by the first forwarding node based on a service type of the first packet and a forwarding path of the first packet. A sending unit 1803 is configured to forward the first packet.

In a possible implementation, the obtaining unit 1801 is further configured to obtain a plurality of packet loss concealment policies. There is a correspondence between each packet loss concealment policy in the plurality of packet loss concealment policies, and a forwarding path of a packet and a service type. The obtaining unit 1801 is further configured to obtain, by using the second forwarding node, the forwarding path of the first packet. The processing unit 1802 is further configured to add a second packet loss concealment policy to the first packet, to obtain an updated first packet. The sending unit 1803 is further configured to forward the updated first packet to a third forwarding node based on the forwarding path. The second packet loss concealment policy is determined by the second forwarding node from the plurality of packet loss concealment policies based on the service type of the first packet and the forwarding path. The second packet loss concealment policy indicates a packet loss concealment policy used when a packet loss occurs on a segment link between the second forwarding node and the third forwarding node.

In a possible implementation, the first packet further includes a first latency threshold, and the first latency threshold indicates duration in which a forwarding node on the forwarding path is allowed to execute a packet loss concealment policy.

The processing unit 1802 is further configured to update the first latency threshold in the first packet based on duration for executing the first packet loss concealment policy, to obtain an updated first packet. The sending unit 1803 is specifically configured to forward the updated first packet.

In a possible implementation, the obtaining unit 1801 is further configured to receive a second packet. The second packet includes a third packet loss concealment policy and a second latency threshold. The second latency threshold indicates duration in which a forwarding node on the forwarding path is allowed to execute a packet loss concealment policy. The processing unit 1802 is further configured to: execute the third packet loss concealment policy, and determine a difference between the second latency threshold and duration for executing the third packet loss concealment policy. The processing unit 1802 is further configured to determine a fourth packet loss concealment policy based on a service type of the second packet and a forwarding path. The fourth packet loss concealment policy indicates a packet loss concealment policy used when a packet loss occurs on a segment link between the second forwarding node and a fourth forwarding node. The fourth forwarding node is a forwarding node behind the second forwarding node on the forwarding path of the second packet. The sending unit 1803 is further configured to forward, by using the second forwarding node, an updated second packet to the fourth forwarding node based on a fact that duration for executing the fourth packet loss concealment policy is greater than the difference. The updated second packet is obtained based on the second packet, and the updated second packet does not include a packet loss concealment policy.

In a possible implementation, the obtaining unit 1801 is further configured to receive a third packet. The third packet is a source code packet, and the source code packet is a packet including to-be-transmitted data. The processing unit 1802 is further configured to: if a packet loss concealment policy of the third packet is an FEC policy, forward, by using the second forwarding node, the third packet, and locally store a copy of the third packet, to recover a lost packet.

In a possible implementation, the obtaining unit 1801 is further configured to receive a fourth packet. The fourth packet is a repair packet, and the repair packet is used to recover a lost source code packet. The processing unit 1802 is further configured to: if the second forwarding node has obtained all source code packets in a transport block corresponding to the fourth packet, discard the fourth packet. The processing unit 1802 is further configured to: if not all source code packets in a transport block corresponding to the fourth packet are obtained, and a quantity of obtained packets that belong to the transport block is greater than or equal to a first threshold, decode a packet in the transport block based on the fourth packet, to recover a lost source code packet in the transport block; or if not all source code packets in a transport block corresponding to the fourth packet are obtained, and a quantity of obtained packets that belong to the transport block is less than a first threshold, store the fourth packet.

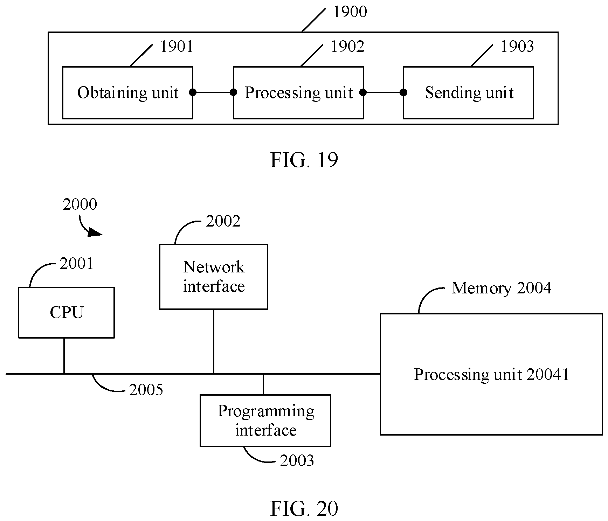

Refer to FIG. 19. FIG. 19 is a schematic diagram of a structure of a controller 1900 according to an embodiment of this application.

As shown in FIG. 19, the controller 1900 may alternatively be specifically a network device. The controller 1900 includes: an obtaining unit 1901, configured to obtain a forwarding path of service traffic and a network quality requirement of the service traffic, where the obtaining unit 1901 is further configured to obtain network quality parameters of a plurality of segment links on the forwarding path, and each segment link in the plurality of segment links is a link between two neighboring forwarding nodes on the forwarding path; a processing unit 1902, configured to determine, based on the network quality requirement and the network quality parameters, a packet loss concealment policy used when a packet loss occurs on each segment link in the plurality of segment links; and a sending unit 1903, configured to send the packet loss concealment policy to forwarding nodes on the plurality of segment links.

In a possible implementation, the packet loss concealment policy includes one or more of an automatic repeat request ARQ policy, a forward error correction FEC policy, and a multipath retransmission policy.

In a possible implementation, the ARQ policy includes a quantity of automatic retransmission times; the FEC policy includes an encoding scheme, a total quantity of packets, and a total quantity of source code packets; and the multipath retransmission policy includes a packet retransmission path.

In a possible implementation, the obtaining unit 1901 is further configured to obtain a network quality parameter set. The network quality parameter set includes network quality parameters that are of segment links and that are uploaded by a plurality of forwarding nodes. The processing unit 1902 is further configured to determine the network quality parameters of the plurality of segment links on the forwarding path from the network quality parameter set.

In a possible implementation, the network quality requirement includes a packet loss rate. The processing unit 1902 is further configured to: determine, based on the packet loss rate in the network quality requirement, a maximum allowed packet loss rate for each segment link in the plurality of segment links; and determine the packet loss concealment policy for each segment link in the plurality of segment links based on the maximum allowed packet loss rate for each segment link and an actual packet loss rate that is for each segment link and that is indicated by the network quality parameter.

In a possible implementation, the processing unit 1902 is further configured to: determine, based on the maximum allowed packet loss rate for each segment link and the actual packet loss rate that is for each segment link and that is indicated by the network quality parameter, a packet loss concealment policy set corresponding to each segment link in the plurality of segment links, where the packet loss concealment policy set includes one or more packet loss concealment policies that meet a maximum packet loss rate requirement; and determine, based on actual latency that is of each segment link and that is indicated by the network quality parameter, a packet loss concealment policy with the lowest latency from the packet loss concealment policy set corresponding to each segment link.

In a possible implementation, the network quality parameters of the plurality of segment links include one or more of latency, a packet loss rate, a bandwidth capacity, and jitter.

Refer to FIG. 20. FIG. 20 is a schematic diagram of a structure of a network device 2000 according to an embodiment of this application. Although the network device 2000 shown in FIG. 20 shows some specific features, a person skilled in the art may be aware from embodiments of this application that, for brevity, FIG. 20 does not show various other features, to avoid confusing more related aspects of the implementations disclosed in embodiments of this application. For this purpose, as an example, in some implementations, the network device 2000 includes one or more processing units (such as a CPU) 2001, a network interface 2002, a programming interface 2003, a memory 2004, and one or more communication buses 2005 configured to interconnect various components. In some other implementations, some functional components or units may alternatively be omitted from or added to the network device 2000 based on the foregoing example.

In some implementations, the network interface 2002 is configured to connect to one or more other network devices/servers in a network system. In some implementations, the communication bus 2005 includes a circuit that performs interconnection and controls communication between system components. The memory 2004 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. Alternatively, the memory 2004 may include a volatile memory. The volatile memory may be a random access memory (random access memory, RAM), and is used as an external cache.

In some implementations, the memory 2004 or a non-transitory computer-readable storage medium of the memory 2004 stores the following programs, modules, and data structures, or a subset thereof, for example, includes an obtaining unit (not shown in the figure), a sending unit (not shown in the figure), and the processing unit 20041.

In a possible embodiment, the network device 2000 may have any function of the first network device in the method embodiment corresponding to FIG. 6.

It should be understood that the network device 2000 corresponds to the first network device in the method embodiment. The modules and the foregoing other operations and/or functions in the network device 2000 are separately configured to implement various steps and methods implemented by the first network device in the method embodiment. For specific details, refer to the method embodiment corresponding to FIG. 6. For brevity, details are not described herein again.

It should be understood that, in this application, the network interface 2002 on the network device 2000 may perform data receiving and sending operations, or the processor may invoke program code in the memory, and implement functions of the transceiver unit in cooperation with the network interface 2002 when required.

In various implementations, the network device 2000 is configured to perform a packet transmission method provided in embodiments of this application, for example, perform a packet loss transmission method corresponding to the embodiment shown in FIG. 6.

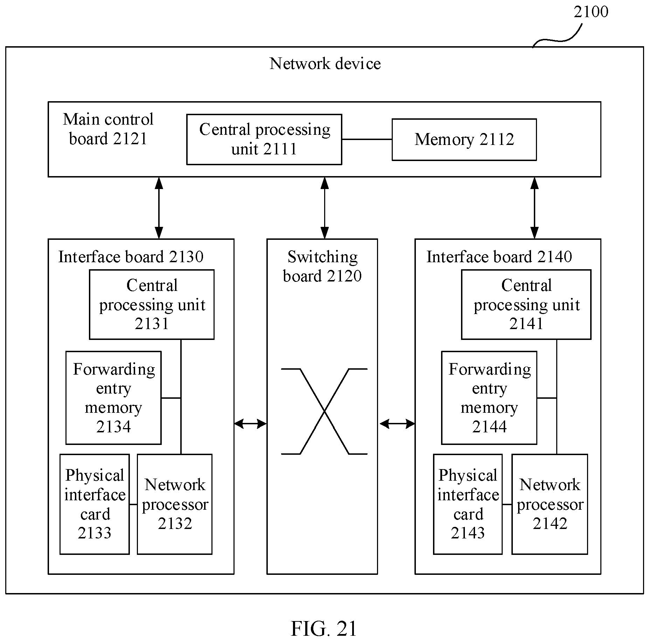

A specific structure of the network device described in FIG. 20 of this application may be shown in FIG. 21.

FIG. 21 is a schematic diagram of a structure of a network device 2100 according to an embodiment of this application. The network device 2100 includes a main control board 2121 and an interface board 2130.

The main control board 2121 is also referred to as a main processing unit (main processing unit, MPU) or a route processor (route processor). The main control board 2121 is configured to: control and manage components in the network device 2100, including route computation, device management, device maintenance, and protocol processing functions. The main control board 2121 includes a central processing unit 2111 and a memory 2112.

The interface board 2130 is also referred to as a line processing unit (line processing unit, LPU), a line card (line card), or a service board. The interface board 2130 is configured to: provide various service interfaces and implement data packet forwarding. Service interfaces include but are not limited to Ethernet interfaces and packet over SONET/SDH (Packet over SONET/SDH, POS) interfaces. The interface board 2130 includes: a central processing unit 2131, a network processor 2132, a forwarding entry memory 2134, and a physical interface card (physical interface card, PIC) 2133.

The central processing unit 2131 on the interface board 2130 is configured to: control and manage the interface board 2130 and communicate with the central processing unit 2111 on the main control board 2121.

The network processor 2132 is configured to implement packet forwarding processing. A form of the network processor 2132 may be a forwarding chip.

The physical interface card 2133 is configured to implement a physical layer interconnection function, so that original traffic enters the interface board 2130, and a processed packet is sent out from the physical interface card 2133. The physical interface card 2133 includes at least one physical interface. The physical interface is also referred to as a physical port, and the physical interface may be a flexible Ethernet (Flexible Ethernet, FlexE) physical interface. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 on the interface board 2130 may also perform a function of the network processor 2132, for example, implement software forwarding based on a general-purpose CPU. In this way, the interface board 2130 does not need the network processor 2132.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143.

Optionally, the network device 2100 further includes a switching board 2120. The switching board 2120 may also be referred to as a switch fabric unit (switch fabric unit, SFU). When the network device has a plurality of interface boards 2130, the switching board 2120 is configured to implement data exchange between the interface boards. For example, the interface board 2130 and the interface board 2140 may communicate with each other by using the switching board 2120.

The main control board 2121 is coupled to the interface board. For example, the main control board 2121, the interface board 2130, the interface board 2140, and the switching board 2120 are connected to a system backplane through a system bus to implement interworking. In a possible implementation, an inter-process communication (inter-process communication, IPC) channel is established between the main control board 2121 and the interface board 2130, and communication is performed between the main control board 2121 and the interface board 2130 through the IPC channel.

Logically, the network device 2100 includes a control plane and a forwarding plane. The control plane includes the main control board 2121 and the central processing unit 2131. The forwarding plane includes components that perform forwarding, such as the forwarding entry memory 2134, the physical interface card 2133, and the network processor 2132. The control plane performs functions such as advertising a route, generating a forwarding table, processing signaling and protocol packets, and configuring and maintaining a status of a device. The control plane delivers the generated forwarding table to the forwarding plane. On the forwarding plane, the network processor 2132 looks up and forwards a packet received by the physical interface card 2133 based on the forwarding table delivered by the control plane. The forwarding table delivered by the control plane may be stored in the forwarding entry memory 2134. In some embodiments, the control plane and the forwarding plane may be completely separated, and are not on a same device.

It should be understood that the obtaining unit 1801 and the sending unit 1803 in the network device 1800 may be equivalent to the physical interface card 2133 or the physical interface card 2143 in the network device 2100. The processing unit 1802 in the network device 1800 may be equivalent to the central processing unit 2111 or the central processing unit 2131 in the network device 2100, or may be equivalent to program code or instructions stored in the memory 2112.

It may be understood that operations performed on the interface board 2140 are consistent with operations performed on the interface board 2130 in this embodiment of this application. For brevity, details are not described again. It should be understood that the network device 2100 in this embodiment may correspond to the first network device in the foregoing method embodiments. The main control board 2121, and the interface board 2130 and/or the interface board 2140 in the network device 2100 may implement functions and/or various steps implemented by the first network device in the foregoing method embodiments. For brevity, details are not described herein again.

It should be noted that there may be one or more main control boards, and when there are a plurality of main control boards, a primary main control board and a secondary main control board may be included. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, a network device may not need a switching board, and an interface board performs a function of processing service data of an entire system. In a distributed forwarding architecture, a network device may have at least one switching board, and implements data exchange between a plurality of interface boards by using the switching board, to provide a large-capacity data exchange and processing capability. Optionally, the form of the network device may also be that there is only one card. In other words, there is no switching board, and functions of the interface board and the main control board are integrated on the one card. In this case, a central processing unit on the interface board and a central processing unit on the main control board may be combined into one central processing unit on the one card, to perform a function obtained after the two are superimposed. Which architecture is specifically used depends on a specific networking deployment scenario, and is not uniquely limited herein.

In some possible embodiments, the network device may be implemented as a virtualization device. The virtualization device may be a virtual machine (virtual machine, VM), a virtual router, or a virtual switch that runs a program for sending a packet. A virtualization device is deployed on a hardware device (for example, a physical server). For example, the first network device may be implemented based on a general-purpose physical server in combination with a network functions virtualization (network functions virtualization, NFV) technology.

It should be understood that the network devices in the foregoing product forms separately have any function of the first network device in the foregoing method embodiments, and details are not described herein.

Further, an embodiment of this application provides a computer program product. When the computer program product runs on a network device, the network device is enabled to perform the method performed by the first network device in the method embodiment corresponding to FIG. 6.

An embodiment of this application further provides a chip system, including a processor and an interface circuit. The interface circuit is configured to: receive instructions and transmit the instructions to the processor. The processor is configured to implement the method in any one of the foregoing method embodiments.

Optionally, the chip system further includes a memory, and there may be one or more processors in the chip system. The processor may be implemented by hardware, or may be implemented by software. When the processor is implemented by hardware, the processor may be a logic circuit, an integrated circuit, or the like. When the processor is implemented by software, the processor may be a general-purpose processor, and the method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be respectively disposed on different chips. A type of the memory and a manner of disposing the memory and the processor are not specifically limited in this application.

The foregoing describes embodiments of this application in detail. Steps in the methods in embodiments of this application may be sequentially scheduled, combined, or deleted based on actual requirements. Modules in the apparatus in embodiments of this application may be divided, combined, or deleted based on actual requirements.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily mean a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined according to A. However, it should be further understood that, determining B based on A does not mean that B is determined only based on A, and B may also be determined based on A and/or other information.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objective of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

**Claims**

1. A packet loss management method, comprising:

   obtaining, by a first forwarding node, a plurality of packet loss concealment policies, wherein there is a correspondence between each packet loss concealment policy in the plurality of packet loss concealment policies, and a forwarding path of a packet and a service type corresponding to the packet;
   obtaining, by the first forwarding node, a packet and a forwarding path of the packet; and
   adding, by the first forwarding node, a first packet loss concealment policy to the packet to obtain an updated packet, and forwarding the updated packet to a second forwarding node based on the forwarding path, wherein the first packet loss concealment policy is determined by the first forwarding node from the plurality of packet loss concealment policies based on the service type and the forwarding path; and the first packet loss concealment policy indicates a packet loss concealment policy used when a packet loss occurs on a segment link between the first forwarding node and the second forwarding node.

2. The method according to claim 1, wherein the method further comprises:

   determining, by the first forwarding node based on the service type, a latency threshold corresponding to the packet, wherein the latency threshold indicates duration in which a forwarding node on the forwarding path is allowed to execute a packet loss concealment policy; and
   the adding, by the first forwarding node, a first packet loss concealment policy to the packet to obtain an updated packet comprises:
   adding, by the first forwarding node, the first packet loss concealment policy and the latency threshold to the packet, to obtain the updated packet.

3. The method according to claim 1 or 2, wherein the method further comprises:

   measuring, by the first forwarding node, network quality of a segment link between the first forwarding node and another forwarding node, to obtain a network quality parameter of one or more segment links; and
   sending, by the first forwarding node, the network quality parameter of the one or more segment links to a controller

4. The method according to any one of claims 1 to 3, wherein the adding, by the first forwarding node, a first packet loss concealment policy to the packet comprises:
   encapsulating, by the first forwarding node, a first packet header into the packet, wherein the first packet header carries the first packet loss concealment policy.

5. The method according to claim 4, wherein the first packet header further comprises an execution parameter of the first packet loss concealment policy; and

   if the first packet loss concealment policy is an automatic repeat request ARQ policy, the execution parameter comprises a quantity of automatic retransmission times;
   if the first packet loss concealment policy is a forward error correction FEC policy, the execution parameter comprises an encoding scheme, a total quantity of packets, and a total quantity of source code packets; or
   if the first packet loss concealment policy is a multipath retransmission policy, the execution parameter comprises a packet retransmission path.

6. A packet loss management method, comprising:

receiving, by a second forwarding node, a first packet sent by a first forwarding node, wherein the first packet comprises a first packet loss concealment policy;

executing, by the second forwarding node, the first packet loss concealment policy in the first packet, wherein the first packet loss concealment policy is determined by the first forwarding node based on a service type of the first packet and a forwarding path of the first packet; and

forwarding, by the second forwarding node, the first packet.

7. The method according to claim 6, wherein the method further comprises:

obtaining, by the second forwarding node, a plurality of packet loss concealment policies, wherein there is a correspondence between each packet loss concealment policy in the plurality of packet loss concealment policies, and a forwarding path of a packet and a service type; and

the forwarding, by the second forwarding node, the first packet comprises:

obtaining, by the second forwarding node, the forwarding path of the first packet; and

adding, by the second forwarding node, a second packet loss concealment policy to the first packet to obtain an updated first packet, and forwarding the updated first packet to a third forwarding node based on the forwarding path, wherein

the second packet loss concealment policy is determined by the second forwarding node from the plurality of packet loss concealment policies based on the service type of the first packet and the forwarding path; and the second packet loss concealment policy indicates a packet loss concealment policy used when a packet loss occurs on a segment link between the second forwarding node and the third forwarding node.

8. The method according to claim 6 or 7, wherein the first packet further comprises a first latency threshold, and the first latency threshold indicates duration in which a forwarding node on the forwarding path is allowed to execute a packet loss concealment policy; and

the forwarding, by the second forwarding node, the first packet comprises:

updating, by the second forwarding node, the first latency threshold in the first packet based on duration for executing the first packet loss concealment policy, to obtain an updated first packet; and

forwarding, by the second forwarding node, the updated first packet.

9. The method according to any one of claims 6 to 8, wherein the method further comprises:

receiving, by the second forwarding node, a second packet, wherein the second packet comprises a third packet loss concealment policy and a second latency threshold, and the second latency threshold indicates duration in which a forwarding node on the forwarding path is allowed to execute a packet loss concealment policy;

executing, by the second forwarding node, the third packet loss concealment policy, and determining a difference between the second latency threshold and duration for executing the third packet loss concealment policy;

determining, by the second forwarding node, a fourth packet loss concealment policy based on a service type of the second packet and a forwarding path, wherein the fourth packet loss concealment policy indicates a packet loss concealment policy used when a packet loss occurs on a segment link between the second forwarding node and a fourth forwarding node; and the fourth forwarding node is a forwarding node behind the second forwarding node on the forwarding path of the second packet; and

forwarding, by the second forwarding node, an updated second packet to the fourth forwarding node based on a fact that duration for executing the fourth packet loss concealment policy is greater than the difference, wherein the updated second packet is obtained based on the second packet, and the updated second packet does not comprise a packet loss concealment policy.

10. The method according to any one of claims 6 to 9, wherein the method further comprises:

receiving, by the second forwarding node, a third packet, wherein the third packet is a source code packet, and the source code packet is a packet comprising to-be-transmitted data; and

if a packet loss concealment policy of the third packet is an FEC policy, forwarding, by the second forwarding node, the third packet, and locally storing a copy of the third packet, to recover a lost packet.

11. The method according to claim 10, wherein the method further comprises:

receiving, by the second forwarding node, a fourth packet, wherein the fourth packet is a repair packet, and the repair packet is used to recover a lost source code packet; and

if the second forwarding node has obtained all source code packets in a transport block corresponding to the fourth packet, discarding the fourth packet, wherein the transport block comprises a plurality of packets;

if the second forwarding node does not obtain all source code packets in a transport block corresponding to the fourth packet, and a quantity of packets that belong to the transport block and that are obtained by the second forwarding node is greater than or equal to a first threshold, decoding a packet in the transport block based on the fourth packet, to recover a lost source code packet in the transport block; or

if the second forwarding node does not obtain all source code packets in a transport block corresponding to the fourth packet, and a quantity of packets that belong to the transport block and that are obtained by the second forwarding node is less than a first threshold, storing the fourth packet.

12. A packet loss management method, comprising:

obtaining, by a controller, a forwarding path of service traffic and a network quality requirement of the service traffic;

obtaining, by the controller, network quality parameters of a plurality of segment links on the forwarding path, wherein each segment link in the plurality of segment links is a link between two neighboring forwarding nodes on the forwarding path;

determining, by the controller based on the network quality requirement and the network quality parameters, a packet loss concealment policy used when a packet loss occurs on each segment link in the plurality of segment links; and

sending, by the controller, the packet loss concealment policy to forwarding nodes on the plurality of segment links.

13. The method according to claim 12, wherein the obtaining network quality parameters of a plurality of segment links on the forwarding path comprises:

obtaining a network quality parameter set, wherein the network quality parameter set comprises network quality parameters that are of segment links and that are uploaded by a plurality of forwarding nodes; and

determining the network quality parameters of the plurality of segment links on the forwarding path from the network quality parameter set.

14. The method according to claim 12 or 13, wherein the network quality requirement comprises a packet loss rate; and the determining a packet loss concealment policy for each segment link in the plurality of segment links based on the network quality requirement and the network quality parameters comprises:

determining, based on the packet loss rate in the network quality requirement, a maximum allowed packet loss rate for each segment link in the plurality of segment links; and

determining the packet loss concealment policy for each segment link in the plurality of segment links based on the maximum allowed packet loss rate for each segment link and an actual packet loss rate that is for each segment link and that is indicated by the network quality parameter

15. The method according to claim 14, wherein the determining the packet loss concealment policy for each segment link in the plurality of segment links based on the maximum allowed packet loss rate for each segment link and an actual packet loss rate that is for each segment link and that is indicated by the network quality parameter comprises:

determining, based on the maximum allowed packet loss rate for each segment link and the actual packet loss rate that is for each segment link and that is indicated by the network quality parameter, a packet loss concealment policy set corresponding to each segment link in the plurality of segment links, wherein the packet loss concealment policy set comprises one or more packet loss concealment policies that meet a maximum packet loss rate requirement; and

determining, based on actual latency that is of each segment link and that is indicated by the network quality parameter, a packet loss concealment policy with the lowest latency from the packet loss concealment policy set corresponding to each segment link.

16. The method according to any one of claims 12 to 15, wherein the packet loss concealment policy comprises one or more of an automatic repeat request ARQ policy, a forward error correction FEC policy, and a multipath retransmission policy.

17. The method according to claim 16, wherein the ARQ policy comprises a quantity of automatic retransmission times;

the FEC policy comprises an encoding scheme, a total quantity of packets, and a total quantity of source code packets; and
the multipath retransmission policy comprises a packet retransmission path.

18. A packet loss management method, wherein the method is applied to a system comprising a controller and a plurality of forwarding nodes, and the method comprises:

obtaining, by the controller, a forwarding path of service traffic and a network quality requirement of the service traffic;
determining, by the controller, network quality parameters of a plurality of segment links on the forwarding path, wherein each segment link in the plurality of segment links is a link between two neighboring forwarding nodes on the forwarding path;
determining, by the controller based on the network quality requirement and the network quality parameters, a packet loss concealment policy used when a packet loss occurs on each segment link in the plurality of segment links, wherein there is a correspondence between the packet loss concealment policy, and the forwarding path of the service traffic and a service type corresponding to the service traffic;
sending, by the controller, the packet loss concealment policy to forwarding nodes on the plurality of segment links; and
executing, by the forwarding nodes on the plurality of segment links in a packet forwarding process, a packet loss concealment policy that corresponds to a forwarding path of a packet and a service type corresponding to the packet, wherein the packet belongs to the service traffic.

19. The method according to claim 18, wherein the obtaining network quality parameters of a plurality of segment links on the forwarding path comprises:

obtaining a network quality parameter set, wherein the network quality parameter set comprises network quality parameters that are of segment links and that are uploaded by the plurality of forwarding nodes;
determining the network quality parameters of the plurality of segment links on the forwarding path from the network quality parameter set.

20. The method according to claim 18 or 19, wherein the network quality requirement comprises a packet loss rate; and the determining a packet loss concealment policy for each segment link in the plurality of segment links based on the network quality requirement and the network quality parameters comprises:

determining, based on the packet loss rate in the network quality requirement, a maximum allowed packet loss rate for each segment link in the plurality of segment links; and
determining the packet loss concealment policy for each segment link in the plurality of segment links based on the maximum allowed packet loss rate for each segment link and an actual packet loss rate that is for each segment link and that is indicated by the network quality parameter

21. The method according to claim 20, wherein the determining the packet loss concealment policy for each segment link in the plurality of segment links based on the maximum allowed packet loss rate for each segment link and an actual packet loss rate that is for each segment link and that is indicated by the network quality parameter comprises:

determining, based on the maximum allowed packet loss rate for each segment link and the actual packet loss rate that is for each segment link and that is indicated by the network quality parameter, a packet loss concealment policy set corresponding to each segment link in the plurality of segment links, wherein the packet loss concealment policy set comprises one or more packet loss concealment policies that meet a maximum packet loss rate requirement; and
determining, based on actual latency that is of each segment link and that is indicated by the network quality parameter, a packet loss concealment policy with the lowest latency from the packet loss concealment policy set corresponding to each segment link.

22. The method according to any one of claims 18 to 21, wherein the executing, by the forwarding nodes on the plurality of segment links in a packet forwarding process, a packet loss concealment policy that corresponds to a forwarding path of a packet and a service type comprises:

> obtaining, by a first forwarding node, a packet and a forwarding path of the packet, wherein the first forwarding node is an initial forwarding node on the plurality of segment links; and
> adding, by the first forwarding node, a first packet loss concealment policy to the packet to obtain an updated packet, and forwarding the updated packet based on the forwarding path, wherein
> the first packet loss concealment policy is determined by the first forwarding node from a plurality of packet loss concealment policies based on a service type corresponding to the packet and the forwarding path; the first packet loss concealment policy indicates a packet loss concealment policy used when a packet loss occurs on a segment link between the first forwarding node and a forwarding node next to the first forwarding node; and the plurality of packet loss concealment policies are from the controller.

23. The method according to claim 22, wherein the method further comprises:

> determining, by the first forwarding node based on the service type of the packet, a latency threshold corresponding to the packet, wherein the latency threshold indicates duration in which a forwarding node on the forwarding path is allowed to execute a packet loss concealment policy; and
> the adding, by the first forwarding node, a first packet loss concealment policy to the packet to obtain an updated packet comprises:
> adding, by the first forwarding node, the first packet loss concealment policy and the latency threshold to the packet, to obtain the updated packet.

24. The method according to claim 22 or 23, wherein the method further comprises:

> measuring, by the first forwarding node, network quality of a segment link between the first forwarding node and another forwarding node, to obtain a network quality parameter of one or more segment links; and
> sending, by the first forwarding node, the network quality parameter of the one or more segment links to the controller

25. The method according to any one of claims 22 to 24, wherein the adding, by the first forwarding node, a first packet loss concealment policy to the packet comprises:
encapsulating, by the first forwarding node, a first packet header into the packet, wherein the first packet header carries the first packet loss concealment policy.

26. The method according to claim 25, wherein the first packet header further comprises an execution parameter of the first packet loss concealment policy; and

> if the first packet loss concealment policy is an automatic repeat request ARQ policy, the execution parameter comprises a quantity of automatic retransmission times;
> if the first packet loss concealment policy is a forward error correction FEC policy, the execution parameter comprises an encoding scheme, a total quantity of packets, and a total quantity of source code packets; or
> if the first packet loss concealment policy is a multipath retransmission policy, the execution parameter comprises a packet retransmission path.

27. The method according to any one of claims 18 to 26, wherein the executing, by the forwarding nodes on the plurality of segment links in a packet forwarding process, a packet loss concealment policy that corresponds to a forwarding path of a packet and a service type comprises:

> receiving, by a second forwarding node, a first packet, wherein the first packet comprises a second packet loss concealment policy, and the second forwarding node is any node other than the initial forwarding node on the plurality of segment links;
> executing, by the second forwarding node, the second packet loss concealment policy in the first packet, wherein the second packet loss concealment policy is determined by a forwarding node previous to the second forwarding node based on a service type of the first packet and a forwarding path of the first packet; and
> forwarding, by the second forwarding node, the first packet.

28. The method according to claim 27, wherein the forwarding, by the second forwarding node, the first packet comprises:

obtaining, by the second forwarding node, the forwarding path of the first packet; and

adding, by the second forwarding node, a third packet loss concealment policy to the first packet to obtain an updated first packet, and forwarding the updated first packet to a third forwarding node based on the forwarding path, wherein

the third packet loss concealment policy is determined by the second forwarding node from the plurality of packet loss concealment policies based on the service type of the first packet and the forwarding path; and the third packet loss concealment policy indicates a packet loss concealment policy used when a packet loss occurs on a segment link between the second forwarding node and the third forwarding node.

29. The method according to claim 27 or 28, wherein the first packet further comprises a first latency threshold, and the first latency threshold indicates duration in which a forwarding node on the forwarding path is allowed to execute a packet loss concealment policy; and

the forwarding, by the second forwarding node, the first packet comprises:

updating, by the second forwarding node, the first latency threshold in the first packet based on duration for executing the second packet loss concealment policy, to obtain an updated first packet; and
forwarding, by the second forwarding node, the updated first packet.

30. The method according to any one of claims 27 to 29, wherein the method further comprises:

receiving, by the second forwarding node, a second packet, wherein the second packet comprises a fourth packet loss concealment policy and a second latency threshold, and the second latency threshold indicates duration in which a forwarding node on the forwarding path is allowed to execute a packet loss concealment policy;
executing, by the second forwarding node, the third packet loss concealment policy, and determining a difference between the second latency threshold and duration for executing the third packet loss concealment policy;
determining, by the second forwarding node, the fourth packet loss concealment policy based on a service type of the second packet and a forwarding path, wherein the fourth packet loss concealment policy indicates a packet loss concealment policy used when a packet loss occurs on a segment link between the second forwarding node and a fourth forwarding node; and the fourth forwarding node is a forwarding node behind the second forwarding node on the forwarding path of the second packet; and
forwarding, by the second forwarding node, an updated second packet to the fourth forwarding node based on a fact that duration for executing the fourth packet loss concealment policy is greater than the difference, wherein the updated second packet is obtained based on the second packet, and the updated second packet does not comprise a packet loss concealment policy.

31. The method according to any one of claims 27 to 30, wherein the method further comprises:

receiving, by the second forwarding node, a third packet, wherein the third packet is a source code packet, and the source code packet is a packet comprising to-be-transmitted data; and
if a packet loss concealment policy of the third packet is the FEC policy, forwarding, by the second forwarding node, the third packet, and locally storing a copy of the third packet, to recover a lost packet.

32. The method according to claim 31, wherein the method further comprises:

receiving, by the second forwarding node, a fourth packet, wherein the fourth packet is a repair packet, and the repair packet is used to recover a lost source code packet; and
if the second forwarding node has obtained all source code packets in a transport block corresponding to the fourth packet, discarding the fourth packet, wherein the transport block comprises a plurality of packets;
if the second forwarding node does not obtain all source code packets in a transport block corresponding to the fourth packet, and a quantity of packets that belong to the transport block and that are obtained by the second forwarding node is greater than or equal to a first threshold, decoding a packet in the transport block based on the fourth packet, to recover a lost source code packet in the transport block; or
if the second forwarding node does not obtain all source code packets in a transport block corresponding to the fourth packet, and a quantity of packets that belong to the transport block and that are obtained by the second forwarding node is less than a first threshold, storing the fourth packet.

33. A network device, comprising a memory and a processor, wherein the memory stores code, the processor is configured to execute the code, and when the code is executed, the network device performs the method according to any one of claims 1 to 5.

**34.** A network device, comprising a memory and a processor, wherein the memory stores code, the processor is configured to execute the code, and when the code is executed, the network device performs the method according to any one of claims 6 to 11.

**35.** A controller, comprising a memory and a processor, wherein the memory stores code, the processor is configured to execute the code, and when the code is executed, the network device performs the method according to any one of claims 12 to 17.

**36.** A network system, comprising the network device according to claim 33, the network device according to claim 34, and the controller according to claim 35.

FIG. 1

FIG. 2

FIG. 3

FIG. 4

Define a service traffic group,
a priority, a QoS requirement,
and OEC latency ⟹

**OEC controller**

| Measurement data | OEC policy |

**OEC node**

| Segment measurement |
| Hierarchical OEC policy management |
| Adaptive traffic matching OEC policy |
| OEP encapsulation/ decapsulation |

Overlay Segment
OEP proprietary protocol
and packet encapsulation

⟺

**OEC node**

| Segment measurement |
| Hierarchical OEC policy management |
| Adaptive traffic matching OEC policy |
| OEP encapsulation/ decapsulation |

**RTN**

**Forwarding unit**

| Overlay intelligent routing |
| Data plane forwarding |

⟺

**Forwarding unit**

| Overlay intelligent routing |
| Data plane forwarding |

**Underlay forwarding**

| UDP |
| IP |
| Link layer/ Physical layer |

Underlay Segment ⟺

**Underlay forwarding**

| UDP |
| IP |
| Link layer/ Physical layer |

Underlay Segment ⟺

**Underlay forwarding**

| UDP |
| IP |
| Link layer/ Physical layer |

Underlay Segment ⟺

**Underlay forwarding**

| UDP |
| IP |
| Link layer/ Physical layer |

FIG. 5

601: Obtain a forwarding path of a service and a network quality requirement of the service

Controller

603: Determine a packet loss concealment policy for each segment link based on the network quality requirement and the network quality parameter

602: Network quality parameter

602: Network quality parameter

604: Packet loss concealment policy

602: Network quality parameter

604: Packet loss concealment policy

604: Packet loss concealment policy

Transmit end

Forwarding node 1

Forwarding node 2

Forwarding node 3

Receive end

Measure the network quality parameter

Measure the network quality parameter

FIG. 6

EP 4 429 136 A1

FIG. 7

Forwarding path

FIG. 8

EP 4 429 136 A1

Forwarding path

Packet loss
rate: 3%
Latency:
100 ms

Forwarding
node 1

FEC: RS
encoding, K=36,
N=38

Packet loss
rate: 5%
Latency:
70 ms

Forwarding
node 2

FEC: RS
encoding, K=36,
N=38

Packet loss
rate: 10%
Latency:
10 ms

Forwarding
node 3

FEC: RS
encoding, K=36,
N=40

Packet loss
rate: 6%
Latency:
10 ms

Forwarding
node 4

ARQ: Quantity
of automatic
retransmission
times=1

Forwarding
node 5

FIG. 9

1000

```
┌─────────────────┐                    ┌─────────────────┐
│      First      │                    │     Second      │
│ forwarding node │                    │ forwarding node │
└─────────────────┘                    └─────────────────┘
         │                                      │
┌────────┴──────────────────────────┐          │
│ 1001: Obtain a plurality of packet │          │
│ loss concealment policies, where   │          │
│ there is a correspondence between  │          │
│ each packet loss concealment       │          │
│ policy in the plurality of packet  │          │
│ loss concealment policies, and a   │          │
│ forwarding path of a packet and a  │          │
│ service type                       │          │
└────────┬───────────────────────────┘          │
┌────────┴───────────────────────────┐          │
│ 1002: Obtain a first packet and a   │          │
│ forwarding path of the first packet │          │
└────────┬────────────────────────────┘          │
         │    1003: Add a first packet loss       │
         │    concealment policy to the first     │
         ├──  packet to obtain a second packet, ──▶│
         │    and forward the second packet       │
         │                                         │
         │          ┌──────────────────────────────┴──────┐
         │          │ 1004: Execute the first packet loss   │
         │          │ concealment policy in the second      │
         │          │ packet                                │
         │          └──────────────────────────────┬──────┘
         │          ┌──────────────────────────────┴──────┐
         │          │ 1005: Forward the second packet       │
         │          └──────────────────────────────┬──────┘
         │                                          │
```

FIG. 10

```
+--+--+--+--+--+--+
|      Token      |
+--+--+--+--+--+--+
|  Time Threshold |
+--+--+--+--+--+--+
| OEC-specified para |
+--+--+--+--+--+--+
```

FIG. 11

EP 4 429 136 A1

| ① | RTN packet header | OEP packet header | Payload |
|---|---|---|---|

| ② | RTN packet header | Payload |
|---|---|---|

| ③ | RTN packet header | OEP packet header | Encoded data |
|---|---|---|---|

```
┌─────────────────────┐
│ Receive a data packet│
└─────────────────────┘
          │
          ▼
┌─────────────────────┐
│  Parse a packet header│
└─────────────────────┘
```

Source code package?  — Yes — ① — Strip the OEP packet header — ② — Forwarding process

No — ③

Determine whether all source code packages are received — No → Transport block ID/Transport block offset sequence number

Yes → Discard

Data packet buffering

Determine whether decoding succeeds → Reply with an ACK → ② → Forwarding process

FIG. 12

1300

1: Obtain a forwarding path of a service and
a network quality requirement of the service

2: Periodically receive a network
quality parameter that is of a
segment link and that is uploaded
by a forwarding node

Controller

3: Determine a packet loss concealment
policy for each segment link based on the
network quality requirement and the
network quality parameter

4: Deliver
the packet
loss concealment
policy and a
policy matching
rule to each
forwarding node

Transmit
end

Forwarding
node 1

Forwarding
node 2

Forwarding
node 3

Receive
end

5: A head node on the
segment link adds a
packet loss concealment
policy to a packet

6: An end node on the segment
link executes the packet loss
concealment policy

FIG. 13

EP 4 429 136 A1

OEC policy table of a node A

| Forwarding path | Service type | Packet loss concealment policy |
|---|---|---|
| <S1,R1> | RTC | FEC:RS,K=36,N=42,Ack:Enable |
| | HTTP | MP-Retrans:output=F |
| | File Sync | ARQ:Max_Retrans=1 |

F

S1 → A — Loss rate=8% / Latency=20ms → B → R1

Transmit end

Receive end

OEP packet header

| Service Type | RTC |
|---|---|
| Token | 01 |
| Time Threshold | 45 |
| ARQ para:Seq=1,MaxRetrans=1 | |

| Service Type | RTC |
|---|---|
| Token | 01 |
| Time Threshold | 35 |

Ack ←

| Token | 01 |
|---|---|
| Acked FEC Block | 1 |

FIG. 14

OEC sending module

OEC receiving module

OEP 3 1

RTN 2

An OEC latency threshold
of a Pkt 2 is insufficient

FIG. 15

| | 0.1 | 0.2 | 0.3 | 0.4 | 0.5 | 0.6 | 0.7 | 0.8 | 0.9 | 1 | 2 | 3 | 4 | 5 |
|---|---|---|---|---|---|---|---|---|---|---|---|---|---|---|
| Common transmission | 311.12 | 184.993 | 136.486 | 109.998 | 93.0467 | 81.1549 | 72.2944 | 65.405 | 59.8751 | 55.3259 | 32.897 | 24.271 | 19.5607 | 16.5463 |
| OEC enhancement control | 19560.7 | 6915.77 | 3764.49 | 2445.13 | 1749.61 | 1330.99 | 1056.23 | 864.529 | 724.535 | 618.632 | 218.793 | 119.163 | 77.4596 | 55.4817 |

Link packet loss rate (%)

FIG. 16

Time sequence network packet loss rate

FIG. 17

1800

1801     1802     1803

| Obtaining unit | Processing unit | Sending unit |

FIG. 18

1900

| 1901 | 1902 | 1903 |
|---|---|---|
| Obtaining unit | Processing unit | Sending unit |

FIG. 19

2000

2002

Network interface

2001

Memory 2004

CPU

Processing unit 20041

2005

Programming interface

2003

FIG. 20

2100

Network device

Main control board 2121

Central processing unit 2111 — Memory 2112

Interface board 2130

Central processing unit 2131

Forwarding entry memory 2134

Physical interface card 2133

Network processor 2132

Switching board 2120

Interface board 2140

Central processing unit 2141

Forwarding entry memory 2144

Physical interface card 2143

Network processor 2142

FIG. 21

## INTERNATIONAL SEARCH REPORT

| International application No. |
| --- |
| **PCT/CN2022/134030** |

| A. | CLASSIFICATION OF SUBJECT MATTER |
| --- | --- |

H04L 1/00(2006.01)i

According to International Patent Classification (IPC) or to both national classification and IPC

| B. | FIELDS SEARCHED |
| --- | --- |

Minimum documentation searched (classification system followed by classification symbols)

H04L1/-; H04L12/-

Documentation searched other than minimum documentation to the extent that such documents are included in the fields searched

Electronic data base consulted during the international search (name of data base and, where practicable, search terms used)

WPABSC; CNABS; CNTXT; CNKI: 报文, 路线, AQR, 链路, 方案, 网络, 延迟, 自动重传, 丢包, 向前纠错, 路由, 策略, 延时, 时延, 路径, FEC, 分段, 节点, 消息, 转发 EPTXT; USTXT; WOTXT; VEN; 3GPP; IEEE: messag+, node+, OEC, retransmiss +, packet los+, ARQ, forward+, Automatic repeat request+, FEC, relay+, rout+, path+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111800218 A (HUAWEI TECHNOLOGIES CO., LTD.) 20 October 2020 (2020-10-20) description, paragraphs [0194]-[0209] | 1-11, 33-34 |
| Y | CN 111800218 A (HUAWEI TECHNOLOGIES CO., LTD.) 20 October 2020 (2020-10-20) description, paragraphs [0194]-[0209] | 12-32, 35-36 |
| Y | CN 112653575 A (WANGSU SCIENCE & TECHNOLOGY CO., LTD.) 13 April 2021 (2021-04-13) description, paragraphs [0049]-[0056] | 12-32, 35-36 |
| A | CN 106255149 A (GUANGZHOU BAIGUOYUAN NETWORK TECHNOLOGY CO., LTD.) 21 December 2016 (2016-12-21) entire document | 1-36 |
| A | US 2015172995 A1 (THALES) 18 June 2015 (2015-06-18) entire document | 1-36 |
| A | CN 110943800 A (YEALINK (XIAMEN) NETWORK TECHNOLOGY CO., LTD.) 31 March 2020 (2020-03-31) entire document | 1-36 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 January 2023** | **28 January 2023** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/134030**

| Patent document cited in search report | | | Publication date (day/month/year) | Patent family member(s) | | | Publication date (day/month/year) |
|---|---|---|---|---|---|---|---|
| CN | 111800218 | A | 20 October 2020 | WO | 2020207406 | A1 | 15 October 2020 |
| | | | | EP | 3940974 | A1 | 19 January 2022 |
| | | | | KR | 20210134787 | A | 10 November 2021 |
| | | | | US | 2022021612 | A1 | 20 January 2022 |
| | | | | EP | 3940974 | A4 | 04 May 2022 |
| | | | | CN | 111800218 | B | 22 April 2022 |
| | | | | JP | 2022528172 | W | 08 June 2022 |
| CN | 112653575 | A | 13 April 2021 | WO | 2022121080 | A1 | 16 June 2022 |
| | | | | CN | 112653575 | B | 30 August 2022 |
| CN | 106255149 | A | 21 December 2016 | CN | 106255149 | B | 24 December 2019 |
| US | 2015172995 | A1 | 18 June 2015 | PL | 2887743 | T3 | 28 April 2017 |
| | | | | EP | 2887743 | A1 | 24 June 2015 |
| | | | | ES | 2612832 | T3 | 18 May 2017 |
| | | | | FR | 3015169 | A1 | 19 June 2015 |
| | | | | SG | 10201408442 R | A | 30 July 2015 |
| | | | | US | 2015172995 | A1 | 18 June 2015 |
| | | | | SG | SG10201408442 | A1 | 30 July 2015 |
| | | | | EP | 2887743 | B1 | 28 September 2016 |
| | | | | SG | 10201408442 | B | 18 October 2016 |
| | | | | FR | 3015169 | B1 | 26 May 2017 |
| | | | | US | 9686733 | B2 | 20 June 2017 |
| CN | 110943800 | A | 31 March 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111436377